(19)

**Europäisches Patentamt**
**European Patent Office**
**Office européen des brevets**

(11) **EP 4 113 384 B1**

(12) **EUROPEAN PATENT SPECIFICATION**

(45) Date of publication and mention
of the grant of the patent:
**10.06.2026 Bulletin 2026/24**

(51) International Patent Classification (IPC):
*G06N 3/063* (2023.01)     *G06N 3/044* (2023.01)
*G06N 3/045* (2023.01)     *G06F 8/40* (2018.01)

(21) Application number: **22181960.0**

(22) Date of filing: **29.06.2022**

(52) Cooperative Patent Classification (CPC):
**G06N 3/063; G06N 3/044; G06N 3/0442;**
**G06N 3/045; G06N 3/0495;** G06N 3/048

(54) **RUNNING BIDIRECTIONAL RECURRENT NEURAL NETWORKS IN HARDWARE**

BETRIEB VON BIDIREKTIONALEN REKURRENTEN NEURONALEN NETZEN IN HARDWARE

EXÉCUTION DE RÉSEAUX DE NEURONES RÉCURRENTS BIDIRECTIONNELS DANS UN
MATÉRIEL

(84) Designated Contracting States:
**AL AT BE BG CH CY CZ DE DK EE ES FI FR GR**
**HR HU IE IS IT LI LT LU LV MC MK MT NL NO PL**
**PT RO RS SE SI SK SM TR**

(30) Priority: **30.06.2021 GB 202109472**

(43) Date of publication of application:
**04.01.2023 Bulletin 2023/01**

(73) Proprietor: **Imagination Technologies Limited**
**Kings Langley, Hertfordshire WD4 8LZ (GB)**

(72) Inventors:
• **CHOUDHURY, Biswarup**
**Kings Langley, WD4 8LZ (GB)**
• **DIKICI, Cagatay**
**Kings Langley, WD4 8LZ (GB)**
• **ROGERS, Jason**
**Kings Langley, WD4 8LZ (GB)**
• **SILVA, Pedro**
**Kings Langley, WD4 8LZ (GB)**

(74) Representative: **Slingsby Partners LLP**
**1 Kingsway**
**London WC2B 6AN (GB)**

(56) References cited:
• **YONGHUI WU ET AL: "Google's Neural Machine**
**Translation System: Bridging the Gap between**
**Human and Machine Translation", 8 October**
**2016 (2016-10-08), XP055542980, Retrieved from**
**the Internet <URL:https://arxiv.org/pdf/**
**1609.08144.pdf> [retrieved on 20190116]**

• **KWON DONGUP ET AL: "Scalable Multi-FPGA**
**Acceleration for Large RNNs with Full**
**Parallelism Levels", 2020 57TH ACM/IEEE**
**DESIGN AUTOMATION CONFERENCE (DAC),**
**IEEE, 20 July 2020 (2020-07-20), pages 1 - 6,**
**XP033838076, DOI: 10.1109/**
**DAC18072.2020.9218528**

• **LI-WEN CHANG ET AL: "Accelerating Recurrent**
**Neural Networks through Compiler Techniques**
**and Quantization", CONFERENCE ON NEURAL**
**INFORMATION PROCESSING SYSTEMS (NIPS),**
**3 December 2018 (2018-12-03), XP055681357**

• **SUN YUNFEI ET AL: "An OpenCL-Based Hybrid**
**CNN-RNN Inference Accelerator On FPGA", 2019**
**INTERNATIONAL CONFERENCE ON FIELD-**
**PROGRAMMABLE TECHNOLOGY (ICFPT), IEEE,**
**9 December 2019 (2019-12-09), pages 283 - 286,**
**XP033701604, DOI: 10.1109/**
**ICFPT47387.2019.00048**

• **RYBALKIN VLADIMIR ET AL: "Hardware**
**architecture of Bidirectional Long Short-Term**
**Memory Neural Network for Optical Character**
**Recognition", DESIGN, AUTOMATION & TEST IN**
**EUROPE CONFERENCE & EXHIBITION (DATE),**
**2017, EDAA, 27 March 2017 (2017-03-27), pages**
**1390 - 1395, XP033096576, DOI: 10.23919/**
**DATE.2017.7927210**

**Description**

BACKGROUND

The present disclosure relates to methods and data processing systems for implementing a Bidirectional Recurrent Neural Network (BRNN) in hardware.

Bidirectional Recurrent Neural Networks (BRNNs) are a type of artificial neural network for operation on a sequence of inputs. Conventional BRNNs include forward and backward layers which may be independently executed. The forward and backward layers may therefore be executed in parallel. In the forward layer, forward state generated during the processing of an input in the sequence is provided for use in the processing of one or more subsequent inputs in the sequence. In the backward layer, backward state generated during the processing of an input in the sequence is provided for use in the processing of one or more preceding inputs in the sequence. The output of a BRNN in respect of a given input of the sequence is therefore influenced not just by the network inputs but also by the processing performed at preceding and future points in the sequence.

BRNNs can be used for machine learning applications. In particular, BRNNs can be applied to a sequence of inputs representing a time series. For example, BRNNs are used in speech recognition, machine translation, and handwriting recognition.

"Google's Neural Machine Translation System: Bridging the Gap between Human and Machine Translation" by Wu et. al discloses Google's Neural Machine Translation system which consists of a deep LSTM network with 8 encoder and 8 decoder layers using residual connections as well as attention connections from the decoder network to the encoder.

"Scalable Multi-FPGA Acceleration for Large RNNs with Full Parallelism Levels" by Kwon et. al identifies the performance bottlenecks of existing RNN partitioning strategies and proposes a RNN partitioning strategy to achieve the scalable multi-FPGA acceleration for large RNNs.

SUMMARY

The invention is set out in the appended set of claims.

BRIEF DESCRIPTION OF THE DRAWINGS

The present invention is described by way of example with reference to the accompanying drawings. In the drawings:

Figure 1 is an example of a Bidirectional Recurrent Neural Network (BRNN) comprising two stacked cells.
Figure 2 is a schematic diagram of an exemplary conventional BRNN cell.
Figure 3 is a schematic diagram of a data processing system for implementing a BRNN.
Figure 4 illustrates the BRNN of Figure 1 unrolled over three timesteps.
Figure 5 is a schematic diagram of the unrolled BRNN of Figure 4 where the BRNN is a conventional BRNN and in which each of the bidirectional layers is expressed as a parallel pair of unidirectional Recurrent Neural Networks (RNNs).
Figure 6 illustrates the separation of the causal and non-causal operations of a simple example of an RNN cell.
Figure 7 is a schematic diagram of an implementation of three of the split RNN cells of Figure 6 for a conventional BRNN in which the causal and non-causal operations at each timestep are separately performed.
Figure 8 is a flowchart illustrating a method for implementing a BRNN in hardware as a derivative neural network.
Figure 9 shows a computer system comprising a neural network accelerator configured to implement an RNN in accordance with the principles described herein.
Figure 10 is a schematic diagram of an integrated circuit manufacturing system.
Figure 11 is a flowchart illustrating a method of performing number format selection for a derivative neural network.
Figure 12 is an example of a sequential forward-backward RNN.
Figure 13 is a schematic diagram of the sequential forward-backward RNN of Figure 12 unrolled over three timesteps.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art. Embodiments are described by way of example only.

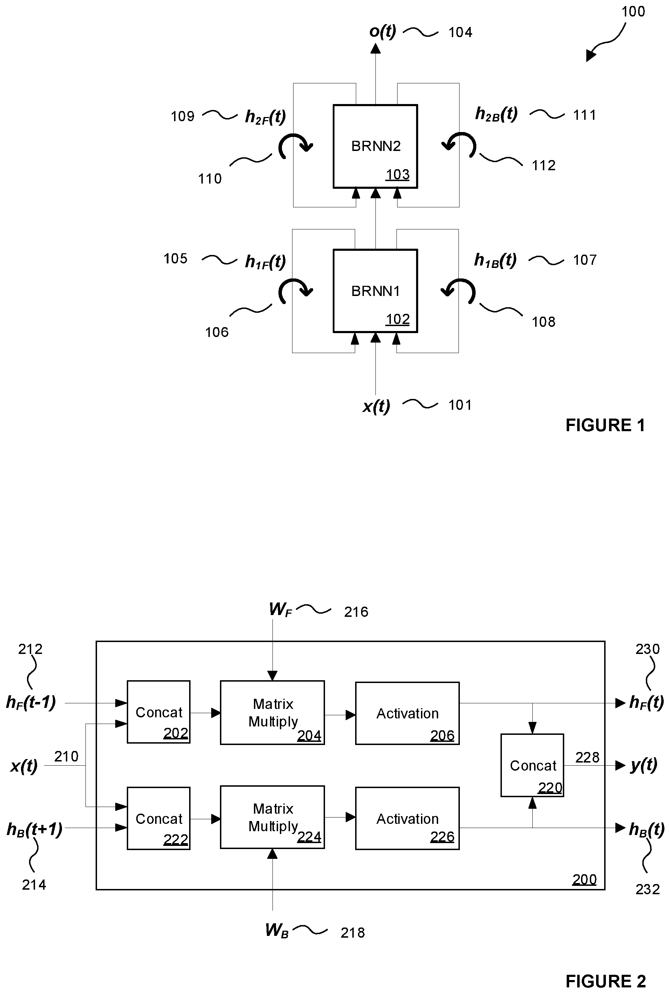

Figure 1 shows an example of a Bidirectional Recurrent Neural Network (BRNN) 100 which will be used to illustrate the implementation of a BRNN in hardware according to the principles described herein. The network comprises two stacked BRNN cells BRNN1 and BRNN2 (102 and 103 in the figure). Each cell may comprise one or more network operations. Each BRNN cell processes an input value (e.g. from sequence 101 for BRNN cell 102) and state generated by that BRNN cell in respect of preceding and subsequent timesteps of the input sequence in a manner defined by the operations comprising the cell and one or more network parameters (which may be referred to herein as "weights"). State generated by a BRNN cell which is provided to subsequent BRNN cells may be referred to as forward state. State generated by a BRNN cell which is provided to preceding BRNN cells may be referred to as backward state. In this manner, a BRNN cell operating at a given timestep of an input sequence receives information from both past (backwards) and future (forward) states of the network.

A BRNN cell is a subgraph (subnetwork) that may be used as a component in a BRNN. For a given timestep, a BRNN cell takes one or more input data tensors and forward and backward state input tensors from preceding and subsequent time steps and generates forward and backward state output tensors and one or more output data tensors for that time step. At least some of the output data tensors generated by the cell may be identical to the output state tensors generated by the cell.

The BRNN is configured to operate on a time series $x(t)$ 101 which could be, for example, a series of audio samples on which the BRNN is to perform speech recognition. The representation of the BRNN in Figure 1 represents the BRNN at a general time step t. At each time step t the BRNN provides an output $o(t)$. By operating the BRNN on the input at each timestep of an input sequence $x(t)$ 101, the BRNN generates a respective sequence of outputs $o(t)$ 104. More generally, a BRNN may operate on any sequence of inputs, which may not be a time series. Reference in this disclosure to a time series will be understood to apply equally to any sequence of inputs, including but not limited to time series. Reference in this disclosure to a time step will be understood to apply equally to an input of any sequence, including but not limited to a time step of a time series. The operation of the BRNN in respect of each input of the sequence represents a step of the BRNN, each operation being a single iteration of the BRNN.

It will be appreciated that although in the examples described herein the BRNN generates a single output sequence in correspondence with each of a sequence of inputs, the methods described equally apply to BRNNs having other configurations, including for example: BRNNs which generate a single output at the end of an input sequence (e.g. a BRNN adapted to perform classification); BRNNs which generate fewer outputs than the network receives inputs; BRNNs comprising branches that give different outputs for the same inputs, e.g. 2 output sequences in 1:1 correspondence to the input sequence.

Each BRNN cell may comprise a plurality of operations each arranged to perform a set of calculations - for example, a BRNN cell could include one or more matrix multiplication operations, convolution operations, activation operations and concatenation operations for operation on an input and forward and backward state $h_{iF}(t)$ and $h_{iB}(t)$.

The first BRNN cell 102 receives input data at time step t from a time series $x(t)$ 101 and processes the input in accordance with the set of calculations predefined for the cell. The processing at the first cell is further performed in dependence on forward state $h_{1F}(t-1)$ generated during processing of the preceding input $x(t-1)$ at the first cell. In the figure, the state passed forward for use during processing of the next time step is shown as state $h_{1F}(t)$ 105 which is subject to a delay 106 such that state $h_{1F}(t)$ is provided to the first cell with input $x(t+1)$. The processing at the first cell is further performed in dependence on backward state $h_{1B}(t+1)$ generated during processing of the subsequent input $x(t+1)$ at the first cell. In the figure, state $h_{1B}(t)$ 107 is passed backward in time 108 for use during processing of the preceding time step such that state $h_{1B}(t)$ is provided to the first cell with input $x(t-1)$.

The second BRNN cell 103 in Figure 1 operates in a similar manner to the first BRNN cell, but cell BRNN2 receives the output of cell BRNN1 as its input. The output of the second BRNN cell $o(t)$ 104 is the output of the BRNN shown in Figure 1. The second BRNN cell performs its own predefined set of calculations on its inputs. The second BRNN cell receives state inputs from the processing performed at one or more preceding and following timesteps. In the figure, the second BRNN cell 103 outputs state $h_{2F}(t)$ 109 which is subject to a delay 110 such that state $h_{2F}(t)$ is provided as the forward state input to the second BRNN cell at timestep **t+1** and state $h_{2B}(t)$ 111 which is subject to a delay 112 such that state $h_{2B}(t)$ is provided as the backward state input to the second BRNN cell at timestep t-1.

Predefined initial state values are typically used to initialise the BRNN. For example, at an initial time step to the BRNN (e.g. at t = 0), initial forward state inputs would be provided to the BRNN; and at the final time step of the BRNN over the sequence of inputs on which the BRNN is to operate (e.g. at t = $t_{max}$), initial backward state inputs would be provided to the BRNN. The initial forward and backward state values could, for example, be constants, learned initial state values, or all zeros.

In Figure 1, the output of a BRNN cell at a general timestep t is used as the forward and backward state inputs to that BRNN cell at following and preceding timesteps respectively, but in general the state generated at a general timestep t may comprise any state values generated at the BRNN cells and may not be the output values of the cells. In general, the forward state input to a cell could include state from one or more preceding timesteps and the backward state input to a cell could include state from one or more following timesteps. In some networks, the state input to a cell could additionally or alternatively include state data generated at other cells of the network, e.g. in alternative versions of the network shown in Figure 1, the state data provided to the second BRNN cell could include state data from the first BRNN cell.

The BRNN shown in Figure 1 is a simple example. In general, a BRNN may comprise one or more BRNN cells and one or more other processing steps may be performed on the inputs and outputs to the BRNN and/or between its cells. Each BRNN cell may comprise, for example, one or more convolution operations, activation operations, and fully connected operations which process the inputs, outputs or intermediate outputs between cells. Input $x(t)$, output $o(t)$ and the forward and backward states $h_{iF}(t)$ and $h_{iB}(t)$ may be tensors having any dimensions as appropriate to the network and its application.

Figure 2 is a schematic diagram of a conventional BRNN cell 200. Conventional BRNNs include forward and backward layers which may be independently executed - for example, both the forward and backward layers receive as their inputs a common input from an input sequence. One or both of the BRNN cells 102 and 103 in Figure 1 could have the structure of the BRNN cell 200. In the manner described in relation to Figure 1, BRNN cell 200 receives an input $x(t)$ 210 (which for higher cells of a stack of cells may be the output of a lower cell), forward state $h_F(t-1)$ 212 from the operation of the BRNN cell 200 on the input of the previous timestep $x(t-1)$, and backward state $h_B(t+1)$ 214 from the operation of the BRNN cell 200 on the input of the next timestep $x(t+1)$. The BRNN cell itself comprises multiple operations.

In the example shown in Figure 2, a first sequence of operations 202-206 are performed in dependence on the forward state and a second sequence of operations 222-226 are performed in dependence on the backward state. The input and forward state are combined at concatenation operation 202 (e.g. concatenated along a channel dimension) which provides a tensor input to a matrix multiplication operation 204. The matrix multiplication operation receives a forward weight tensor as a matrix $W_F$ 216 for multiplication with the concatenated tensor generated by concatenation operation 202. The output of the matrix multiplication operation 204 is then operated on by an activation operation 206, which applies an activation function to the output of the matrix multiplication operation.

In Figure 2, the input and backward state are combined at concatenation operation 222 (e.g. concatenated along a channel dimension) which provides a tensor input to a matrix multiplication operation 224. The matrix multiplication operation receives a backward weight tensor as a matrix $W_B$ 218 for multiplication with the concatenated tensor generated by concatenation operation 222. The output of the matrix multiplication operation 224 is then operated on by an activation operation 226, which applies an activation function to the output of the matrix multiplication operation. The activation functions may be any function as appropriate to the application of the BRNN - for example, the activation functions may be tanh, a ReLU function, or a sigmoid function. The matrix multiplication and/or activation operations performed in the first and second sequences may be the same or different operations.

The results of the forward operations and the backward operations are combined by concatenation operation 220, to provide the output of the BRNN cell 200 as output $y(t)$ 228. Forward state output $h_F(t)$ 230 for use by the BRNN cell at the next timestep and backward state output $h_B(t)$ 232 for use by the BRNN cell at the preceding timestep are generated at the BRNN cell. In Figure 2, the forward and backward state is provided by the activation operations 206 and 226, but in general the state could be generated at any part of the cell - e.g. at the matrix multiplication operations. One or both of the forward and backward state outputs could be the output $y(t)$ 228. In other examples the forward and backward state may be different to the output of the BRNN cell (e.g. it may include intermediate tensors generated during operations performed at any part of the BRNN cell).

The operation of the BRNN cell 200 on an input tensor $x(t)$ in the case that the activation function is tanh can be represented as, for example:

$$y(t) = merge\left(\tanh\left(W_F\begin{bmatrix}x(t)\\h_F(t-1)\end{bmatrix}\right), \tanh\left(W_B\begin{bmatrix}x(t)\\h_B(t+1)\end{bmatrix}\right)\right) \qquad (1)$$

Where the merge could be, for example, a concatenation or an elementwise addition.

The BRNN cell 200 is a simple example of a conventional BRNN cell. Such conventional BRNNs may also be referred to as 'parallel BRNNs', because the forward and backward layers may be executed independently and thus in parallel. Sequential BRNN cells are also described below for which the input to one of the forward or backward directions is the output of the other direction - i.e. the forward and backward operations are not independent and do not receive a common input. It will be understood that there are many different kinds of BRNN cell which may be implemented according to the principles described herein. For example, a BRNN cell of a BRNN implemented as described herein may be an LSTM (Long Short Term Memory) cell or a GRU (Gated Recurrent Unit) cell, as are known in the art. Different types of BRNN cell have different characteristics and it will be appreciated that the choice of any particular type of BRNN cell may be determined by the particular application to which an BRNN is applied.

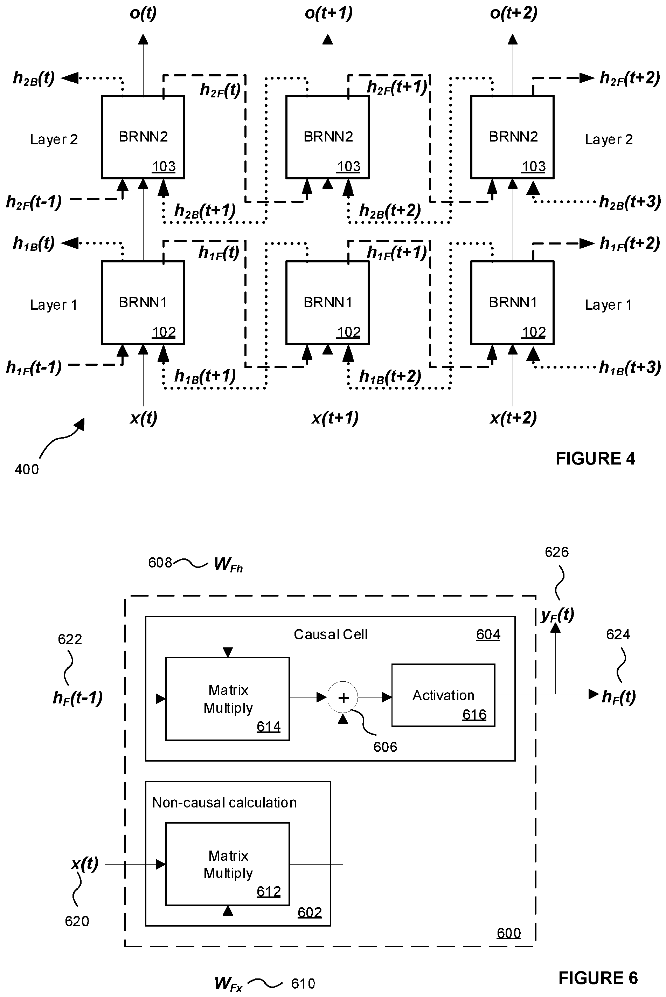

Figure 4 illustrates the BRNN of Figure 1 unrolled over three timesteps t, t+1, and t+2 so as to form an unrolled BRNN 400. The BRNN cells could be, for example, conventional or sequential BRNN cells. Each cell of the BRNN corresponds to a layer of the BRNN when unrolled - for example, cell BRNN1 is unrolled to create layer 1 in Figure 4 and cell BRNN2 is unrolled to create layer 2. It can be seen from Figure 4 that the forward state output $h_{1F}(t)$ of the first BRNN cell 102 at timestep t is provided as the forward state input to an identical instance of that first BRNN cell 102 at the next time step t+1. And the backward state output $h_{1B}(t+1)$ of the first BRNN cell at timestep t+1 is provided as the backward state input to an identical instance of that first BRNN cell 102 at the preceding time step t. Similarly, the forward state outputs of each of the second BRNN cells 103 are provided as the forward state inputs to identical instances of those second cells at the next time step, and the backward state outputs of each of the second BRNN cells 103 are provided as the backward state inputs to identical instances of those second cells at the preceding time step. The unrolled BRNN generates an output o(t) in respect of each of the sequence of inputs x(t).

Since all of the first BRNN cells are identical and all of the second BRNN cells are identical it will be appreciated that, mathematically, the unrolled BRNN 400 shown in Figure 4 is equivalent to operating the BRNN shown in Figure 1 over a sequence of three inputs. In general, a BRNN may be unrolled over any plurality of time steps. The example shown in Figure 4 shows the BRNN unrolled over only three steps but in a practical system the number of time steps would typically be larger.

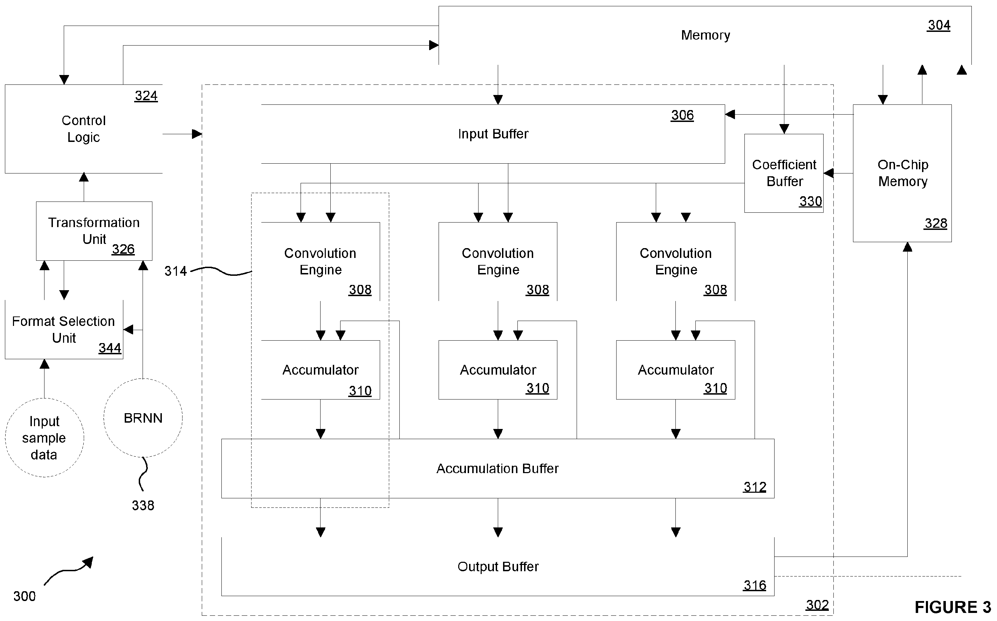

A data processing system 300 for implementing a BRNN is illustrated in Figure 3. The data processing system comprises an accelerator 302 for performing the tensor operations of a neural network. The accelerator may be referred to as a Neural Network Accelerator (NNA). The accelerator comprises a plurality of configurable resources which enable different kinds of feed-forward neural network, such as various convolutional neural networks and multi-layer perceptrons, to be implemented at the accelerator.

The implementation of a BRNN in hardware will be described with respect to the data processing system shown in the particular example of Figure 3 in which the accelerator 302 includes a plurality of processing elements 314 each comprising a convolution engine, but it will be understood that - unless stated otherwise - the principles described herein for implementing a BRNN in hardware are generally applicable to any data processing system comprising an accelerator capable of performing the tensor operations of a neural network.

In Figure 3, the accelerator includes an input buffer 306, a plurality of convolution engines 308, a plurality of accumulators 310, an accumulation buffer 312, and an output buffer 316. Each convolution engine 308, together with its respective accumulator 310 and its share of the resources of the accumulation buffer 312, represents a hardware processing element 314. Three processing elements are shown in Figure 3 but in general there may be any number. Each processing element receives a set of weights from a coefficient buffer 330 and input values (e.g. of an input tensor) from input buffer 306. The coefficient buffer may be provided at the accelerator - e.g. on the same semiconductor die and/or in the same integrated circuit package. By combining the weights and the input tensors the processing elements are operable to perform the tensor operations of a neural network.

In general, accelerator 302 may comprise any suitable tensor-processing hardware. For instance in some examples the accelerator may comprise pooling units (e.g. for implementing max-pooling and average-pooling operations), or element processing units for performing per-element mathematical operations (e.g. adding two tensors together). Such units are not shown in Figure 3 for simplicity.

The processing elements of the accelerator are independent processing subsystems of the accelerator which can operate in parallel. Each processing element 314 includes a convolution engine 308 configured to perform convolution operations between weights and input values. Each convolution engine 308 may comprise a plurality of multipliers, each of which is configured to multiply a weight and a corresponding input data value to produce a multiplication output value. The multipliers may be, for example, followed by an adder tree arranged to calculate the sum of the multiplication outputs. In some examples, these multiply-accumulate calculations may be pipelined.

A large number of hardware operations must typically be performed at an accelerator in order to execute each tensor operation of a neural network. This is because the input and weight tensors are often very large. Since it may take more than one hardware pass of a convolution engine to generate a complete output for a convolution operation (e.g. because a convolution engine may only receive and process a portion of the weights and input data values) the accelerator may comprise a plurality of accumulators 310. Each accumulator 310 receives the output of a convolution engine 308 and adds the output to the previous convolution engine output that relates to the same operation. Depending on the implementation of the accelerator, a convolution engine may not process the same operation in consecutive cycles and an accumulation buffer 312 may therefore be provided to store partially accumulated outputs for a given operation. The appropriate partial result may be provided by the accumulation buffer 312 to the accumulator at each cycle.

The accelerator may include an input buffer 306 arranged to store input data required by the accelerator (e.g. the convolution engines) and a coefficient buffer 330 arranged to store weights required by the accelerator (e.g. the convolution engines) for combination with the input data according to the operations of the neural network. The input buffer may include some or all of the input data relating to the one or more operations being performed at the accelerator on a given cycle. The coefficient buffer may include some or all of the weights relating to the one or more operations being processed at the accelerator on a given cycle. The various buffers of the accelerator shown in Figure 3 may be implemented in any suitable manner - e.g. as any number of data stores which are local to the accelerator (e.g. on the same semiconductor die and/or provided within the same integrated circuit package) or accessible to the accelerator over a data bus or other interconnect.

A memory 304 may be accessible to the accelerator - e.g. the memory may be a system memory accessible to the accelerator over a data bus. An on-chip memory 328 may be provided for storing weights and/or other data (such as input data, output data, etc.). The on-chip memory may be local to the accelerator such that the data stored in the on-chip memory may be accessed by the accelerator without consuming memory bandwidth to the memory 304 (e.g. a system memory accessible over a system bus). Data (e.g. weights, input data) may be periodically written into the on-chip memory from memory 304. The coefficient buffer 330 at the accelerator may be configured to receive weight data from the on-chip memory 328 so as to reduce the bandwidth between the memory and the coefficient buffer. The input buffer 306 may be configured to receive input data from the on-chip memory 328 so as to reduce the bandwidth between the memory and the input buffer. The memory may be coupled to the input buffer and/or the on-chip memory so as to provide input data to the accelerator.

The accumulation buffer 312 may be coupled to an output buffer 316, to allow the output buffer to receive intermediate output data of the operations of a neural network operating at the accelerator, as well as the output data of the end operation (i.e. the last operation of a network implemented at the accelerator). The output buffer 316 may be coupled to the on-chip memory 328 for providing the intermediate output data and output data of the end operation to the on-chip memory 328, e.g. for use as state when implementing a BRNN at the accelerator in the manner described below.

Typically, it is necessary to transfer a large amount of data from the memory to the processing elements. If this is not done efficiently, it can result in a high memory bandwidth requirement, and high power consumption, for providing the input data and weights to the processing elements. This is particularly the case when the memory is "off-chip" - that is, implemented in a different integrated circuit or semiconductor die from the processing elements. One such example is system memory accessible to the accelerator over a data bus. In order to reduce the memory bandwidth requirements of the accelerator when executing a neural network, it is advantageous to provide a memory which is on-chip with the accelerator at which at least some of the weights and/or input data required by an implementation of a neural network at the accelerator may be stored. Such a memory may be "on-chip" (e.g. on-chip memory 328) when the memory is provided on the same semiconductor die and/or in the same integrated circuit package.

The various exemplary connections are shown separately in the example of Figure 3, but, in some embodiments, some or all of them may be provided by one or more shared data bus connections. It should also be understood that other connections may be provided, as an alternative to or in addition to those illustrated in Figure 3. For example, the output buffer 316 may be coupled to the memory 304, for providing output data directly to the memory 304. Likewise, in some examples, not all of the connections illustrated in Figure 3 may be necessary. For example, the memory 304 need not be coupled to the input buffer 306 which may obtain input data directly from an input data source - e.g. an audio subsystem configured to sample the signal from a microphone dedicated to capturing speech from a user of a device comprising the data processing system.

Implementing a BRNN in hardware

Implementing a BRNN in hardware on data processing systems adapted to perform neural networks with no recurrency is difficult because the operations of each cell of the BRNN depend on both the forward and backward state. For example, consider a BRNN cell at a general time t in a time series of inputs to the network: in order to perform the operations of the cell at time t the cell will require the forward state generated by that cell operating on the input at time **t-1,** but the cell operating on the input at time **t-1** will not be able to perform its operations until the backward state generated by the cell operating on the input at time t is known. This circular dependency makes it difficult to implement a BRNN in hardware because such hardware (e.g. the neural network accelerator shown in Figure 3) generally requires a static neural network.

A static neural network is a feed-forward neural network which can be represented by a static graph. BRNNs are dynamic neural networks which include at least two interrelated feedback loops because the output of a BRNN at a given step depends on the processing performed at one or more preceding and following steps of the neural network. The operations performed at a BRNN cell which are performed in dependence on forward state generated at a preceding time step may be referred to as the forward operations of the BRNN cell. The operations performed at a BRNN cell which are performed in dependence on backward state generated at a preceding time step may be referred to as the backward operations of the BRNN cell. The forward and backward operations performed at a BRNN cell may be different - e.g. the matrix operations and/or the weights used in the forward and backward operations of a BRNN cell may be different. In some examples, the forward and backward operations performed at a BRNN cell may be the same.

In order to permit the execution of BRNNs on hardware adapted to perform static neural networks, the inventors propose separately unrolling each cell of a BRNN into a forward recurrent neural network and a backward recurrent neural network over the number of timesteps on which the BRNN is to operate. This approach transforms the dynamic graph of a BRNN into a static graph for operation on a given number of inputs and having a fixed set of forward and backward state inputs. Consequently, the BRNN becomes suitable for implementation at an accelerator according to conventional implementation and optimisation algorithms.

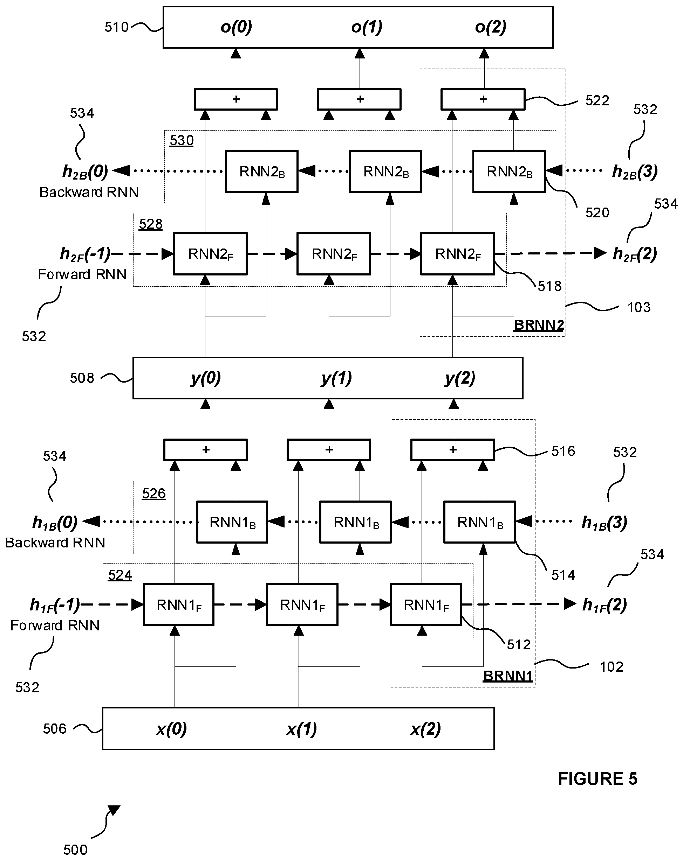

By way of example, Figure 5 illustrates the BRNN of Figure 1 unrolled over three timesteps t = **0,** 1 and 2 so as to form a derivative neural network 500. In this example, the layers of the BRNN represent conventional BRNNs in which the forward and backward operations are independently performed on a common input. Each of the unrolled BRNN cells shown in Figure 4 is represented in the derivative neural network of Figure 5 as a pair of recurrent neural networks: a forward recurrent neural network and a backward recurrent neural network. In Figure 5, cell BRNN1 102 is unrolled to create a forward recurrent neural network 524 comprising cells $RNN1_F$ 512 which operate on forward state $h_{1F}$ only and a backward recurrent neural network 526 comprising cells $RNN1_B$ 514 which operate on backward state $h_{1B}$ only. Similarly, cell BRNN2 is unrolled to create a forward recurrent neural network 528 comprising cells $RNN2_F$ 518 which operate on forward state $h_{2F}$ only and a backward recurrent neural network 530 comprising cells $RNN2_B$ 520 which operate on backward state $h_{2B}$ only.

In the derivative network 500 each of the corresponding BRNN cells shown in Figure 4 is separated into a respective pair of forward and backward cells which, because the BRNN is a conventional BRNN, operate on the same input of the input sequence 506. The outputs from the forward and backward cells of each pair are combined (e.g. concatenated) so as to generate a respective output which is equivalent to the output of the BRNN cell operated on the same input. For example, cell BRNN1 102 in Figure 5 is represented as a forward cell $RNN1_F$ 512 and a backward cell $RNN1_B$ 514 which each operate on an input of the sequence 506. The outputs of the forward and backward cells are combined 516 (e.g. at a concatenation operation) so as to generate an output 508 for the first BRNN cell. Similarly, the second BRNN cell 103 is represented as a forward cell $RNN2_F$ 518 and a backward cell $RNN2_B$ 520 which each operate on an output 508 of the first BRNN cell. The outputs of the forward and backward cells are combined 522 (e.g. at a concatenation operation) so as to generate an output 510 for the BRNN.

For simplicity, the passing of state values between instances of the forward and backward RNN cells at successive timesteps is illustrated schematically in Figure 5 by a simple arrow but it will be appreciated that, for example, the state generated at a first forward cell instance 512 in respect of the input at t = 0 will not be available to the second forward cell instance 512 in respect of the input at t = 1 until the relevant processing at the first forward cell instance has completed. Similarly, the state generated at a first backward cell instance 514 in respect of the input at t = 2 will not be available to the second backward cell instance 514 in respect of the input at t = 1 until the relevant processing at the first backward cell instance has completed.

In the example shown in Figure 5, the derivative network 500 is shown comprising three steps but in general the BRNN represented by the derivative network may be unrolled over any number of time steps corresponding to the number of inputs on which the BRNN is to operate. The number of inputs of a BRNN is known prior to operating the BRNN on those inputs since the operations at each time step depend on the forward state from the preceding time step and the backward state from the subsequent time step. Thus both the first and last inputs of the sequence must be known in order to perform the operations of the BRNN. However, a given BRNN may operate on sequences of different lengths, and thus the derivative network may need to be unrolled over different numbers of timesteps when processing different sequences. The derivative network representing the BRNN unrolled over the number of inputs is configured to generate an output o(t) 510 in respect of each of the sequence of inputs x(t) 506.

In order to initialise a BRNN both forward and backward state values may be provided for use in processing the first and last inputs of the sequence. In the example shown in Figure 5, the input state 532 of the derivative network 500 comprises two forward state values $h_{iF}(-1)$ (where i is an index 1 or 2 corresponding to the two forward state values) provided to the cell instances operating in respect of the first input at t = 0 and two backward state values $h_{iB}(3)$ (where i is an index 1 or 2 corresponding to the two forward state values) provided to the cell instances operating in respect of the last input at t = 2. The input state could be, for example, constant values, learned initial state values, or all zeros. The two forward state values $h_{iF}(2)$ generated in respect of the last input at t = 2 and the two backward state values **$h_{iB}(0)$** generated in respect of the first input at t = 0 may be provided as state outputs 534 of the derivative network 500. In some applications, the output state of BRNN operated over a sequence of inputs could be used as the input state to a subsequent application of the BRNN operated over a subsequent sequence of inputs.

Thus, the operations of a BRNN cell are separated into a forward RNN and a backward RNN: the forward RNN comprising cells configured to perform the forward operations on a received input value and forward state; and the backward RNN comprising cells configured to perform the backward operations on the received input value and backward state.

By definition, the forward and backward operations of a parallel BRNN are independent. In other words, each parallel BRNN cell comprises a set of forward operations which require an input value and respective forward state and a set of backward operations which require the input value and respective backward state. In the example shown in Figure 5, cell BRNN1 of the BRNN shown in Figure 1 comprises forward RNN cell $RNN1_F$ 512 and backward RNN cell $RNN1_B$ 514, and cell BRNN2 comprises forward RNN cell $RNN2_F$ 518 and backward RNN cell $RNN1_B$ 520. In this example, the combination of the forward and backward RNNs 512 and 514 is equivalent to cell BRNN1 of the source BRNN shown in Figure 1, and the combination of the forward and backward RNNs 518 and 520 is equivalent to cell BRNN2.

The implementation of a BRNN in hardware will now be described with reference to the data processing system of Figure 3. In general, the principles described herein may be applied to the implementation of a BRNN at any accelerator capable of performing the tensor operations of a neural network. For example, the accelerator could be a graphics processing unit (GPU), a tensor accelerator, a digital signal processor (DSP), or a neural network accelerator (NNA). The accelerator 302 may not be capable of independent execution and may require management and configuration (e.g. by control logic 324) in order to execute code.

In order to implement a BRNN 338 on accelerator 302, a transformation unit 326 is configured to generate a pair of RNN cells in respect of each BRNN cell of the BRNN 338: a forward RNN cell (e.g. 512 in Figure 5) and a backward RNN cell (e.g. 514). The transformation unit may be further configured to generate a combination operation (e.g. 516) for the pair of RNN cells to combine the outputs of the forward and backward RNN cells so as to form an output equivalent to the output of the BRNN cell. In some examples the combination of the outputs from a pair of RNN cells may be a concatenation of the output values from the RNN cells. Intermediate values (e.g. 508) between pairs of RNN cells corresponding to different layers of the source BRNN need not be explicitly generated in the hardware 300. For example, in some examples, the outputs of the forward and backward RNN cells need not be combined prior to being provided as the input to the next pair of RNN cells (e.g. 518 and 520) corresponding to the next layer of the BRNN 338. In such examples, the outputs of the RNN cells may be implicitly or explicitly combined at subsequent RNN cells - e.g. the combination 516 shown in Figure 5 could be performed at the RNN cells 518 and 520.

The output sequence (e.g. 510) from the pair of RNNs corresponding to the final layer of the BRNN is equivalent to the output sequence from the source BRNN represented by the pairs of forward and backward RNNs. The transformation unit may be configured to generate a combination unit for operation on the outputs from the topmost pair of forward and backward RNNs so as to generate an output sequence equivalent to the output sequence of the source BRNN.

The transformation unit is further configured to unroll the pairs of forward and backwards RNNs generated for each BRNN cell over a predetermined number of steps corresponding to the input sequence on which the BRNN is to operate. Rather than attempt to configure the accelerator 302 to perform the BRNN directly, the transformation unit provides a derivative network comprising an unrolled set of forward and backward RNN layers for implementation at the accelerator 302. An example of a derivative network is shown in Figure 5. When unrolled, a neural network cell may be referred to as a layer.

Since the RNN cells are unrolled over a predetermined number of steps, the transformation unit converts the dynamic source BRNN into an unrolled RNN (the derivative network) comprising a set of forward and backward layers which can be represented by a static graph. The derivative network may therefore be implemented at an accelerator which would otherwise not be capable of efficiently performing the BRNN in hardware. As a result, the same accelerator can be used to implement either recursive or non-recursive neural networks, extending its utility. The approach described herein comprises executing a derivative network at an accelerator so as to perform the originally defined BRNN.

Control logic 324 is configured to implement neural networks at the accelerator. The control logic configures the processing elements 314 of the accelerator to perform the tensor operations of a neural network, e.g. by setting the appropriate accelerator parameters, defining appropriate data structures at the memory 304 and on-chip memory 328, and passing references to those data structures to the accelerator along with the instructions defining the tensor operations to be executed. The control logic may cause the weights required by the tensor operations to be read into the coefficient buffer 330 (e.g. via on-chip memory 328), and an input to be provided to input buffer 306. A large number of hardware operations must typically be performed at an accelerator in order to execute each tensor operation of a neural network. This is because the input and weight tensors are often very large. It will generally take more than one hardware pass of the processing elements 314 to generate a complete output for an operation. The control logic may be configured to synchronise the provision of weights and input data to the processing elements of the accelerator such that the output of each operation is accumulated at the accumulation buffer 312 over a number of passes.

The use of control logic to configure and manage the processing of a neural network at an accelerator is known in the art and suitable control logic is typically provided with an accelerator for implementing neural networks. Control logic 324 may comprise one or more of: software (e.g. a driver) executing at a processor of the data processing system 300 (e.g. a CPU); firmware (e.g. at the accelerator 301 itself); a dedicated processor such as may be implemented in a system on chip (SoC) at or coupled to accelerator 302. In some examples, the control logic may comprise a driver running at a general purpose processor of the data processing system and firmware running at an SoC of the accelerator 302. Typically the accelerator will comprise on-device registers that configure aspects of the operations performed by the accelerator and the control logic will set these registers in order to appropriately configure the accelerator to implement a given neural network.

It will be noted that the forward and backward RNNs operate on a sequence of inputs in opposing directions. For example, in Figure 5, a cell 512 of the forward RNN 524 must operate on **x(0)** prior to operating on input value **x(1)** because the forward state generated by the forward RNN when operating on **x(0)** is required in the operations performed on input value **x(1);** and a cell 514 of the backward RNN 526 must operate on **x(1)** prior to operating on input value **x(0)** because the backward state generated by the backward RNN when operating on **x(1)** is required in the operations performed on input value **x(0).**

For conventional BRNNs, where the forward and backward cells receive a common input, it is advantageous to configure the control logic to index the input values (e.g. 506 or 508) to the cells of the forward and backward RNNs such that a sequence of input values on which the RNNs are to operate may be stored only once and provided to both the forward and backward RNNs without requiring re-ordering of the sequence of input values in hardware. For example, each input of the sequence may be assigned (i) a forward index which indicates the order in which the sequence of input values are to be provided to the forward RNN and (ii) a backward index which indicates the order in which the sequence of input values are to be provided to the backward RNN. The backward index may run in reverse with respect to the forward index - e.g. the backward index may indicate that input **x(2)** in Figure 5 is the first input in the input sequence to be provided to the backward RNN and input **x(0)** is the last input in the input sequence to be provided to the backward RNN.

Intermediate values passed between layers of the derivative neural network (e.g. 508 in Figure 5) may be similarly indexed for subsequent forward and backward layers of the network.

An input sequence comprising a predefined number of inputs may be held at one or more of the input buffer 306, on-chip memory 328 and memory 304. It can be advantageous to arrange that all of the inputs of a sequence for operation on by a derivative neural network are held at the input buffer 306.

The data processing system comprises the transformation unit 326 to convert a BRNN into a static derivative network as described herein for implementation at the accelerator. In some examples, the transformation unit 326 may be provided at the control logic, but other arrangements are possible - e.g. the transformation unit may be separate logic embodied in software, hardware or firmware at the data processing system. In some examples, the transformation unit is software configured to process a BRNN prior to its submission to the control logic for implementation in hardware at the accelerator.

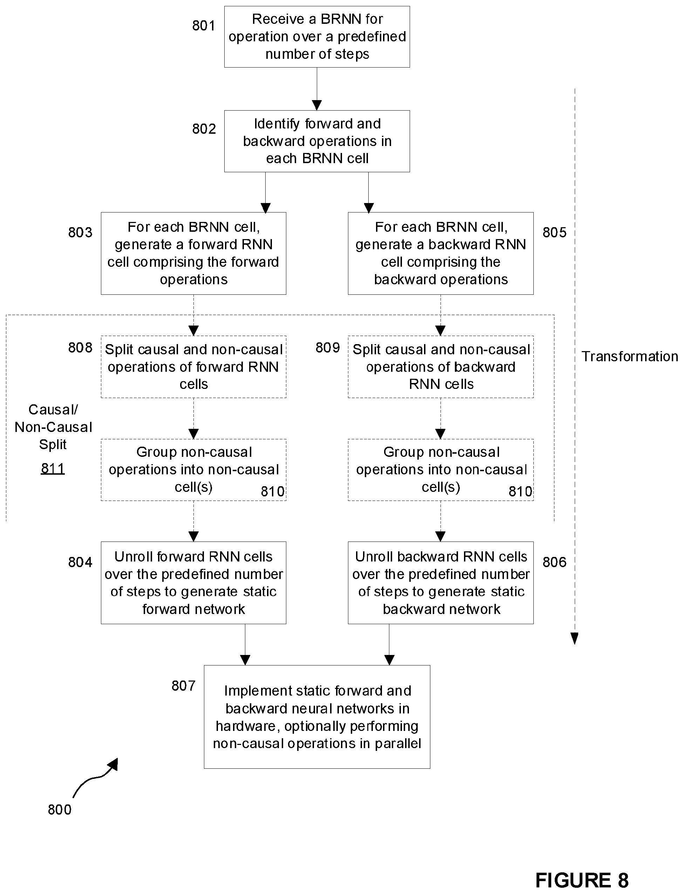

The operation of the transformation unit 326 will now be described with reference to the flowchart 800 shown in Figure 8 which illustrates a method of implementing a BRNN in hardware. At 801, a representation of the BRNN 338 to be implemented in hardware is received at the transformation unit along with information (e.g. a parameter) representing the number of steps over which the BRNN is to operate. The number of steps will depend on the application to which the BRNN is to be applied (e.g. a number of captured audio samples which the BRNN is to process).

The BRNN representation may be represented in any suitable manner - such as a mathematical representation, or any other representation of the BRNN on which the transformation unit is configured to operate. There are several standards for high-level definitions of a neural network, any of which could be suitable input to the algorithm. Deep learning framework APIs tend to be close to pure mathematical definitions, and there are some cross-framework "standards" that work at a similar level (e.g. ONNX). Code which is ready for execution at a particular accelerator will typically be closer to the hardware and include features specific to that hardware. There are also widely-used intermediate representations, such as Relay, which are typically used in Deep Neural Network (DNN) compilers.

The transformation unit is configured to identify the forward and backward operations in each cell of the BRNN. Forward (direction) operations are those which are performed in dependence on forward state which is generated by the BRNN cell at a preceding step of the input sequence. Backward (direction) operations are those which are performed in dependence on backward state which is generated by the BRNN cell at a subsequent step of the input sequence.

The forward operations of each BRNN cell are grouped together 803 into a respective forward RNN cell representing a forward RNN. The forward RNN receives the forward state to the BRNN cell which, being generated in the forward operations, is generated for a given step of the input sequence by the forward RNN at a preceding step of the input sequence.

The backward operations of each BRNN cell are grouped together 805 into a respective backward RNN cell representing a backward RNN. The backward RNN receives the backward state to the BRNN cell which, being generated in the backward operations, is generated for a given step of the input sequence by the backward RNN at a following step of the input sequence.

For conventional BRNNs, some operations performed by a BRNN cell may be performed independently of both the forward and backward state. These may be termed non-causal operations and are described in more detail below. Such operations may be grouped with the forward and/or backward operations, or in some examples one or more non-causal cells may be defined, each of which could be performed before and/or after and/or concurrently with the forward and/or backward operations. It can be advantageous to perform the non-causal operations in parallel in the manner described below.

The transformation unit is configured to unroll 804 the forward RNN for the BRNN cell over the predefined number of steps over which the BRNN is to operate so as to generate a static forward neural network for that cell. The transformation unit is configured to unroll 806 the backward RNN for the BRNN cell over the predefined number of steps over which the BRNN is to operate so as to generate a static backward neural network for that cell. For conventional BRNNs, any non-causal cells defined for the BRNN cell in accordance with the approach below may similarly be unrolled to form an unrolled non-causal network in addition to the forward and backward neural networks. Any of the various approaches known in the art for unrolling (sometimes termed unfolding) an RNN may be used. For example, mathematical approaches to unrolling an RNN are described in Chapter 10 (see in particular 10.1) of Deep Learning by Ian Goodfellow, Yoshua Bengio, & Aaron Courville, MIT Press, 2016.

The forward and backward neural networks (and any non-causal layers) generated for a BRNN cell together represent a layer of the BRNN. The set of forward and backward neural networks (and any non-causal layers) generated for all of the BRNN cells collectively represent a static derivative neural network which is equivalent to the BRNN unrolled over the predefined number of steps. As has been described, one or more combination layers may be required to combine (e.g. concatenate) the outputs of the forward and backward neural networks (and any non-causal layers) so as to form an output sequence in respect of the predefined number of inputs.

For conventional BRNNs, it can be advantageous to perform each pair of forward and backward neural networks in parallel. This can improve the efficiency of execution of the derivative neural network representing the BRNN because the outputs from both the forward and backward neural networks corresponding to a BRNN layer are required in order for processing to progress onto subsequent pairs of forward and backward neural networks corresponding to subsequent BRNN layers. For example, the forward and backward neural networks may be concurrently implemented by the control logic 324 at the processing elements 314 of the accelerator 302. The forward and backward neural networks may be configured to operate on a common sequence of inputs. Forward and backward indices may be assigned to each input of the sequence in the manner described above.

In some exemplary implementations of conventional BRNNs, each pair of forward and backward neural networks representing a layer of the BRNN may be processed sequentially.

Either of the forward and backward neural networks could be processed first. For example, the forward neural network may be processed first followed by the corresponding backward neural network of a pair, or vice versa. For the sequential BRNNs described below, the operations performed in one direction (e.g. forward) necessarily depend on the output of the operations performed in the opposite direction (e.g. backward) and therefore the forward and backward RNNs of the derivative neural network must be performed in the same order (e.g. backward RNN then forward RNN such that the output of the operations of the backward RNN are available as inputs to the forward RNN).

Steps 802-806 (and including step 811, when present) represent a transformation of the BRNN into a static derivative neural network. It will be appreciated that in some examples the BRNN may be unrolled over the predefined number of steps before generating the identifying the forward and backward operations of each layer of the BRNN and/or before generating the forward and backward networks for each layer of the BRNN. Thus, in some examples the transformation of the BRNN into a static derivative neural network comprises: (i) the BRNN is unrolled over the predefined number of steps; (ii) the forward and backward operations at each layer of the unrolled BRNN are identified; and (iii) grouping together the forward and backward operations identified for each layer of the unrolled BRNN so as to generate static forward and backward neural networks in respect of each layer of the unrolled BRNN.

In general, steps 802-806 (and including step 811, when present) may be performed in any suitable order and one or more of the steps may be performed together. The sequence of steps in Figure 8 is offered by way of example only and is not offered so as to suggest a strict order of steps or that each of the steps shown in the Figure must be performed separately to any of the other steps.

Typically, the predefined number of steps over which the BRNN is to operate will depend on the length of the input sequence on which the BRNN is to operate. For applications where there is some flexibility as to the length of the input sequence (e.g. an input stream may be divided up into overlapping or non-overlapping input sequences of a predefined length), the length of the input sequence may be selected in dependence on the particular characteristics of the accelerator hardware so as to optimise the performance of the derivative neural network on the accelerator whilst maintaining acceptable latency. For example, an instance of a derivative neural network implemented in hardware at the accelerator requires all of the inputs of an input sequence (i.e. the predefined number of inputs equal to the number of time steps for processing by the BRNN) to be available prior to execution of that instance commencing. As a result, whilst increasing the predefined number of steps may sometimes improve the efficiency of execution, this will also have the effect of increasing the latency of the BRNN performed by the derivative neural network.

In the manner described herein by way of example, transformation unit 326 transforms the BRNN into a static derivative neural network for operation on an input sequence of a predefined length which is mathematically equivalent to the received representation of the BRNN performed on that input sequence. Suitable forward and backward state inputs are provided to the derivative neural network so as to initialise the network. As will be appreciated, such state inputs may be selected according to the application to which the BRNN is applied.

The control logic 326 is configured to implement 807 the derivative neural network in hardware at the accelerator 302. As described above, this can be performed in accordance with a conventional approach to implementing neural networks on the accelerator, e.g. through the use of a driver for the accelerator and firmware executing at the accelerator.

Causal/non-causal split

Hardware for performing neural network operations, such as neural network accelerators (NNAs), are typically optimised to perform large numbers of tensor calculations in parallel. The parallel nature of hardware accelerators is especially useful when running convolutional neural networks, for which each convolution layer can be processed in parallel - for example across a plurality of processing elements 314. However, when recurrency is introduced and the calculations performed at cells of a neural network at a given time step depend on calculations performed at cells of the neural network in respect of previous and future time steps, existing approaches can result in poor performance. This is a result of several factors, including low utilisation of the parallel architectures typical of accelerators for executing neural networks, poor suitability of existing optimisation algorithms to adapting a BRNN for execution in hardware, and high memory bandwidth consumed as a result of inefficiently reading weights and input data into the accelerator at every time step.

Substantial improvements to the performance of BRNNs implemented in hardware can be achieved by splitting the operations performed in the RNN cells of the forward and backward neural networks (e.g. at one or more of the RNN cells shown in Figure 5) into a set of non-casual operations and a set of causal operations. Casual operations of an RNN cell are those which are performed in dependence on the forward/backward state received as a state input of that cell. Non-causal operations of an RNN cell are those which can be executed without any dependence on state received as a state input of that cell - i.e. those operations of a cell which can be performed once the input data to that cell are known. Non-causal operations may therefore be executed simultaneously once the respective input data are available for those operations. Since there is no strict order of execution that needs to be observed for the non-causal parts, it is possible to execute multiple timesteps in parallel for more efficient use of the hardware, leading to benefits such as higher utilisation and faster inference times. In particular, in hardware such as accelerator 302 which comprises a plurality of processing instances 314, the splitting out of the non-causal calculations enables them to be performed in parallel across the processing instances.

It will be appreciated that, when splitting the operations as discussed above, the causal operations may include one or more non-causal calculations - e.g. because it is advantageous to perform those non-causal calculations with the causal operations. However, the set of non-causal operations do not include any causal calculations since the non-causal operations are to be performed in parallel in hardware. Thus, it shall be understood that references to causal operations herein refer to a set of operations which includes all of the causal operations of an RNN cell but which may also include some of the non-causal operations of the RNN cell; and references to non-causal operations herein refer to a set of operations which includes at least some of the non-causal operations of an RNN cell for performance in parallel and no causal operations of the RNN cell.

The transformation unit 326 is configured to split out the non-causal operations from the causal operations of the forward and/or backward RNN cells when forming the derivative neural network for implementation at the accelerator 302. This enables the non-causal operations to be grouped together for performance in parallel. An example as to how causal and non-causal operations may be split for an RNN cell will now be described. The same approach can be adopted for each recurrent cell of the derivative neural network. It will be appreciated that, depending on the particular operations of the derivative neural network and the available parallel processing elements in hardware, non-causal operations may be performed in parallel other than by convolutions.

Figure 6 illustrates the separation of the causal and non-causal operations of a simple example of an RNN cell. In the figure, the RNN cell is a forward RNN cell of a forward neural network formed by the transformation unit 326 but it will be appreciated that the same approach applies to backward RNN cells of backward neural networks. Figure 6 shows a simple example of an RNN cell but more complex RNN cells such as LSTM or GRU cells can also be represented as a set of one or more matrix operations on a set of input and state tensors, along with various activation and other functions. Other types of cell may comprise other types of mathematical operations which may also be separated into causal and non-causal parts in accordance with the principles set out herein. Other types of operation may be split using different techniques. For example, a concatenation followed by an elementwise multiply could be refactored as two elementwise multiplies followed by a concatenation.

Consider a simple forward RNN cell in which a weight tensor $\mathbf{W}$ is combined with an input tensor $\mathbf{x(t)}$ and forward state tensor $\mathbf{h(t-1)}$ at a matrix multiplication operation. The matrix multiplication $\boldsymbol{p} = \boldsymbol{Wq}$ of tensors $\mathbf{q}$ and $\mathbf{W}$ may be equivalently expressed as a sum of two matrix multiplications $\mathbf{p} = \boldsymbol{Wq} = \boldsymbol{W'q'} + \boldsymbol{W''q''}$ where $\mathbf{W'}$ and $\mathbf{W''}$ are subsets of the elements of $\mathbf{W}$ and $\mathbf{q'}$ and $\mathbf{q''}$ are subsets of the elements of $\mathbf{q}$. It therefore follows that a forward RNN cell performing a matrix multiplication may be equivalently expressed as the RNN cell 600 shown in Figure 6 in which the causal and non-causal parts of the cell calculations are performed as separate matrix multiplications 612 and 614, each of which receives a corresponding subset of the weights $\mathbf{W_F}$ shown in Figure 2 (and, by analogy, in the case of a backward RNN cell the causal and non-causal parts of the cell calculations may be performed with a corresponding subset of the weights $\mathbf{W_B}$ shown in Figure 2).

Consider further that the original forward RNN cell is arranged to apply an activation function tanh to the output of the matrix multiplication. The equivalence of the original and split RNN cells can therefore be appreciated as follows:

$$o(t) = \tanh\left(W_F \begin{bmatrix} x(t) \\ h(t-1) \end{bmatrix}\right)$$
$$= \tanh\left(W_{Fx}x(t) + W_{Fh}h(t-1)\right)$$

$$(2)$$

Where the top line expresses the operation performed by the original RNN cell and the bottom line expresses the operations performed at the split RNN cell 600. In the example of the forward RNN call of Figure 6, $W_{Fx}$ 610 are the elements of the weights $\mathbf{W_F}$ (as shown in Figure 2) which are combined (e.g. used in processing) with the input $\mathbf{x(t)}$ 620, and $\mathbf{W_{Fh}}$ 608 are the elements of the weights $\mathbf{W_F}$ (as shown in Figure 2) which are combined (e.g. used in processing) with the (forward) state $\mathbf{h_F(t-1)}$ 622. The result of the non-causal calculations performed at matrix multiplication 612 are combined at the addition operation 606 with result of the causal calculations performed at matrix multiplication 614. For example, the addition operation 606 may comprise performing an element-wise addition operation of the result of the non-causal calculations with the result of the causal calculations. The sum of the causal and non-causal calculations is then subject to the activation function 616 so as to generate output $\mathbf{y_F(t)}$ 626 and forward output state $\mathbf{h_F(t)}$ 624. In this example, the forward state output is the cell output but in general that need not be the case.

By splitting the causal and non-causal parts of an RNN cell, the performance of the causal and non-causal operations in a hardware implementation of an RNN comprising one or more such cells may be separately optimised. In particular, since the non-causal operations do not need to wait for state values to be generated at a preceding time step, it is possible to group together the non-causal operations to be performed on a plurality of inputs and perform those operations together in parallel at a plurality of processing elements. This enables the parallel processing capabilities of an accelerator adapted to implement a neural network in hardware to be utilised. In particular, accelerators for implementing neural networks typically include parallel processing elements adapted to efficiently perform convolution operations - for example, the convolution engines 308 of accelerator 302. Without parallelisation of the non-causal calculations, the constituent operations of a cell of the neural network would be executed sequentially, typically only making full use of a single hardware instance (e.g. a single processing element 314), resulting in lower utilisation and slower inference.

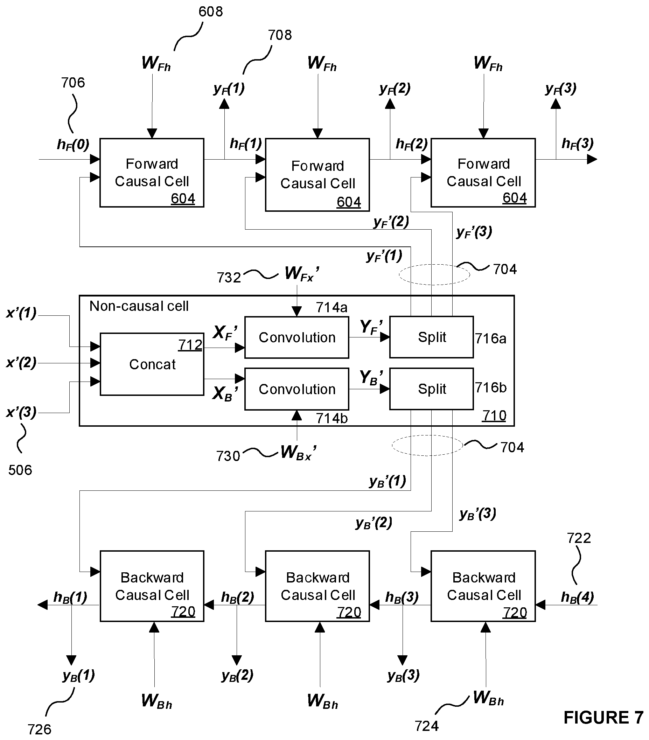

Figure 7 is a schematic diagram of a pair of forward and backward neural networks representing a BRNN layer (i.e. BRNN1 or BRNN2) of the exemplary conventional BRNN of Figure 5 to which the causal/non-causal split approach described herein has been applied. Figure 7 shows the pair of forward and backward neural networks unrolled over the three timesteps, with the non-causal operations being performed in parallel for the three timesteps. Each of the three forward RNN cells 604 or backward RNN cells 720 may have its causal and non-causal operations separated in the manner described with respect to Figure 6. The same approach can be adopted for each cell of a derivative neural network formed by the transformation unit. In this manner, some or all of the non-causal operations of the derivative neural network described above may be performed in parallel over the inputs of an input sequence.

In general, the non-causal operations of a forward/backward neural network of a derivative neural network generated in accordance with the principles described herein are split out so as to allow the performance of those non-causal operations in parallel over the time steps of that forward/backward neural network. This is the case for derivative neural networks derived from conventional and sequential BRNNs. Since conventional BRNNs include forward and backward layers which may be independently executed (i.e. the performance of a layer in one direction does not depend on the output of the layer in the other direction), it is further possible to combine the non-causal operations of both the forward and backward operations in respect of a given BRNN layer for performance in parallel.

In generating a derivative neural network representing a source BRNN, the transformation unit 326 may be configured to split out the non-causal operations from the causal operations. This is illustrated by the optional causal/non-causal split shown in the flowchart of Figure 8. On generating the forward and/or backward RNN cells at steps 803 and 805, the transformation unit 326 splits 808/809 the causal and non-causal operations of some or all of the forward/backward RNN cells and group 810 at least some of the non-causal operations into one or more non-causal cells.

In general for BRNNs - including sequential BRNNs - the non-causal operations of the forward RNN cells may be grouped together and, separately, the non-causal operations of the backward RNN cells may be grouped together for performance in parallel. For conventional BRNNs where the forward and backward operations are independent, the at least some of the non-causal operations from both forward and backward cells may be grouped together in the one or more non-causal cells for performance in parallel. For example, a pair of forward and backward neural networks may be generated at the transformation unit in respect of a layer of a conventional BRNN along with a single non-causal cell comprising non-causal operations from both the forward and backward networks. Thus, with reference to Figure 7 and in respect of a layer of a BRNN, a single non-causal cell 710 could be generated along with two sets of causal cells: a set of forward cells 604 representing a forward neural network (e.g. 524); and a set of backward cells 720 representing a backward neural network (e.g. 526) similarly arranged to operate on the output(s) 704 from the non-causal cell but using backward state values.

In some examples, the identification of the non-causal operations may be performed at step 802 when the forward and backward operations of each BRNN cell are identified. The split 811 of the causal operations from the non-causal operations may be performed by the transformation unit prior to the generation of the forward and backward neural networks. For instance, the non-causal operations of each BRNN cell may be identified and at least some of the non-causal operations grouped into a respective non-causal cell. The forward and backward operations of the remaining causal operations of each BRNN cell may be identified and transformed by the transformation unit into respective forward and backward neural networks in the manner described herein. Prior to unrolling of the forward and backward cells 804/806, each of the forward and backward cells may be substituted with factorised cells in which the non-causal and causal operations are split.

In general, the optional causal/non-causal split 811 could be performed: before or after identifying the forward and backward operations 802 of a BRNN cell; before or after generating a forward and backward RNN cell 803/805; before or after unrolling the forward and backward cells over the predefined number of steps 804/806.

By grouping together at least some of the non-causal operations of the pairs of forward and/or backward neural networks, the transformation unit enables those operations to be performed in parallel at the accelerator 302. The transformation unit may form one or more groups of non-causal operations over the predefined number of inputs over which the derivative network is to operate. For example, all of the predefined number of inputs to a given pair of forward and/or backward neural networks representing a layer of the BRNN may be grouped together and provided to a non-causal cell formed in respect of that layer such that the non-causal operations are performed in parallel in respect of all of the inputs to the layer. In other examples, subsets of the predefined number of inputs to a given pair of forward and/or backward neural networks representing a layer of the BRNN may be grouped together and provided to a respective non-causal cell of that layer such that each of the subset of non-causal operations are performed in parallel. The number of inputs grouped together may be selected in dependence on the processing capabilities of the hardware on which the derivative neural network is to operate - e.g. in dependence on the number of operations which may be concurrently performed in parallel at the processing elements 314 of the accelerator 302.

One approach to performing the non-causal operations in parallel is to convert all matrix operations into convolutions for performance at the parallel convolution engines 308 of accelerator 302. Since the convolution engines are optimised for performing convolutions, this can substantially improve the performance of running the derivative neural network in hardware. In data processing systems with processing elements which are optimised to perform calculations in parallel other than convolutions, the operations of the cells of the derivative neural network may be re-cast as calculations for which the processing elements are optimised.

Figure 7 provides an illustration as to how the non-causal operations of a conventional BRNN cell may be performed in parallel at the convolution engines 308 of the accelerator 302. In this example, the non-causal operations from both the forward and backward operations of the respective BRNN layer are grouped together. In Figure 7, all of the input tensors 506 are concatenated at a non-causal cell 710 so as to form a tensor **X'** (shown in the figure as identical tensors X$_F$' and X$_B$') for operation on by the forward and backward parts of the non-causal operations.

By way of example, the input tensor $x_t$ comprises 506 input values $x_t \in \mathbb{R}^{1 \times 512}$ (e.g. an audio sample of a input audio stream comprising a sequence of audio samples representing speech) and a pair of weight tensors $W_{Fx}, W_{Bx} \in \mathbb{R}^{512 \times 1024}$ for the forward and backward directions. The input and weight tensors both have additional spatial dimensions (e.g. height and width) added so as to become $x'_t \in \mathbb{R}^{1 \times 1 \times 1 \times 512}$ and weight tensor $W'_{Fx}, W'_{Bx} \in \mathbb{R}^{1 \times 1 \times 512 \times 1024}$. All the inputs to the non-causal cell are concatenated at concatenation unit 712 over the width dimension to obtain tensors $X'_F = X'_B \in \mathbb{R}^{1 \times 1 \times T \times 512}$, where T represents the number of time steps over which the non-causal cell operates (e.g. the number of inputs to the BRNN). In this example the dimensions of W$_{Fx}$' and W$_{Bx}$' represent respectively the kernel height, kernel width, number of input channels and number of output channels, and the dimensions of X$_F$' and X$_B$' represent respectively the batch size, data height, data width and number of input channels.

The dimension over which concatenation is performed may be selected in dependence on the particular characteristics of the hardware accelerator. For example, the convolution engines of some hardware accelerators may be configured such that it is advantageous to concatenate over a particular dimension (e.g. "width" or "height") so as to optimise the performance of the convolution operation performed on the result of the concatenation.

Adding additional spatial dimensions to the input tensors changes their shape but not the underlying values since the new dimensions have size '1'. It can be advantageous to change the tensor shapes because convolution operations in neural networks typically expect data as a 4D tensor. To give a simple example, a 2D tensor [[0, 9, 4]] having dimensions (1, 3) may be re-shaped into 4D with dimensions (1, 1, 1, 3) and the tensor would be expressed as [[[[0, 9, 4]]]].

The tensors $X_F'$ and $X_B'$ may then be convolved with $\mathbf{W_{Fx}}'$ and $W_{Bx}'$ at convolution units 714a and 714b to obtain intermediate outputs for the non-causal calculations $Y_F' = W'_{Fx} * X_F'$ and $Y_B' = W'_{Bx} * X_B'$, where * represents the convolution operations between weights $W'_x$ and the inputs X' with a stride of one for both the height and width dimensions.

The output of each convolution is of the form $Y'_F, Y'_B \in \mathbb{R}^{1\times1\times T\times1024}$. Roughly speaking, the convolution operation is the mathematical equivalent of doing a matrix multiplication of $x_t$ with $W_x$ separately for each time step, but performing these calculations as a convolution enables the utilisation of multiple convolution engines 308 at the accelerator 302 in parallel. This reduces both memory bandwidth because the weights may be copied into the coefficient buffer at the start of the convolution and not prior to calculations at each individual time step, and latency because the performance of the derivative neural network at the accelerator improves substantially.

A hardware accelerator can typically process parallel streams of input data using a common set of weights (a filter) in a convolution operation. This is particularly useful when dealing with convolution layers which, for example, process an image where the same filter is applied to the whole image as sliding window. By spatially grouping input data, the input data may be handled in a similar way to a feature map on the input to a convolution operation, hence enabling processing of the input data in parallel at the hardware accelerator. In other examples, the non-causal operations may be performed in parallel as operations other than convolution operations.

Doing non-causal calculations in parallel at a plurality of processing elements improves performance in three ways. Firstly, it increases hardware utilisation since the calculations may be run over as many parallel streams as there are processing elements. Secondly, memory bandwidth consumption is reduced as the same weight coefficients (e.g. at coefficient buffer 330) may be used by the plurality of processing elements performing the parallel calculations, instead of the same weight coefficients needing to be read in from memory in respect of each input in order to perform the non-causal calculations on that input. Minimising bandwidth has the further advantage of reducing the number of cycles spent on reading/writing from memory, which improves the overall latency of the model. And thirdly, the approach reduces the processing required in the causal sequence of calculations because the non-causal calculations have been separated out, instead of being performed with the causal calculations.

At the split units 716a and 716b, the respective intermediate output $Y_B'$ or $Y_F'$ is split into outputs y' for each of the three time steps, where $y' \in \mathbb{R}^{1\times1024}$. Each y' is provided as an input 704 to a respective forward causal cell 604 or backward causal cell 720. The causal cells operate on the two-dimensional tensor components, rather than the 4D tensors provided to the convolution operation.

Since the forward causal calculations performed at each time step requires the forward state generated at the previous time step, the forward causal calculations cannot be performed in parallel. Similarly, since the backward causal calculations performed at each time step requires the backward state generated at the following time step, the backward causal calculations cannot be performed in parallel. Forward and backward causal cells are provided for each time step, so in Figure 7 there are three causal cells. Each of the forward causal cells receive as an input the corresponding tensor output y' from the non-causal cell 710 and the forward state 706 generated by the causal cell in respect of the preceding time step. Each of the backward causal cells receive as an input the corresponding tensor output y' from the non-causal cell 710 and the backward state 722 generated by the causal cell in respect of the following time step.

Each of the forward causal cells 604 may, for example, have the functional structure of the forward causal cell 604 shown in Figure 6, with each forward causal cell operating the same set of weights 608 on the received state 706 - e.g. by means of matrix multiplication 614. The result of the operation of the weights 608 on the received state 706 is combined with the respective output from the non-causal cell, e.g. by means of addition 606. The combination of the causal and non-causal calculations is then subject to an activation function 206 so as to provide an output 708 - which in the present example is also the state for the next causal cell. As is described above, in other embodiments one or more state values (e.g. tensors or single values) may be generated in respect of a time step that may or may not include the output in respect of that time step.

Each of the backward causal cells 720 could in some examples have an equivalent functional structure to the forward causal cell 604 shown in Figure 6 but using backward state 722. The backward causal cells 720 could perform different matrix operations using the weights 724 (which could be different to the weights of the forward causal cells) and could perform a different activation function on the output of the matrix operations. Each of the backward causal cells 720 provide a respective output 726 for combination with the forward causal cell outputs 708 so as to generate an output of the BRNN layer represented by the pair of forward and backward neural networks. For example, if the forward causal cells correspond to forward neural network 524 and the backward causal cells correspond to backward neural network 526 in Figure 5, then the outputs of those forward and backward causal cells in respect of each time step may be combined at operation 516 so as to generate BRNN layer output 508.

As has been described with respect to Figure 8, in the data processing system shown in Figure 3, in order to split out the non-causal calculations for a derivative neural network so as to enable those calculations to be performed in parallel, the transformation unit may be configured to process each cell of the derivative neural network so as to separate those calculations which are not dependent on state from previous cell calculations and cause the non-causal calculations to be performed in parallel at the processing elements of the accelerator. In some examples, the transformation unit 326 may be configured to form a derivative neural network from the BRNN representation 338 and then further process the derivative neural network so as to separate the causal and non-causal calculations in the manner described herein, the non-causal calculations being performed at least in part in parallel at the processing elements 314 of the accelerator 302.

The control logic 324 and/or the non-causal 710 and/or causal 604 cells themselves may be configured to convert inputs and weights into and out of the forms suitable for parallel processing - for example, with respect to Figure 7, the non-causal cell 710 (e.g. its convolution unit 714) may add the additional spatial dimensions to the inputs and the weights so as to put those tensors into a form suitable for convolution. In some examples, the additional spatial dimensions need not be added to the inputs and weights and can be inferred during calculations.

When deriving a derivative neural network from a BRNN representation and separating the causal and non-causal calculations in the manner described herein, if there is flexibility in the predefined number of steps over which the BRNN is to operate, it is advantageous to select the predefined number of steps to be an integer multiple of the number of processing elements at the accelerator. This helps to maximise use of the processing elements during execution of the derivative neural network since the parallel non-causal calculations can be evenly spread across the processing elements of the system, maximising performance.

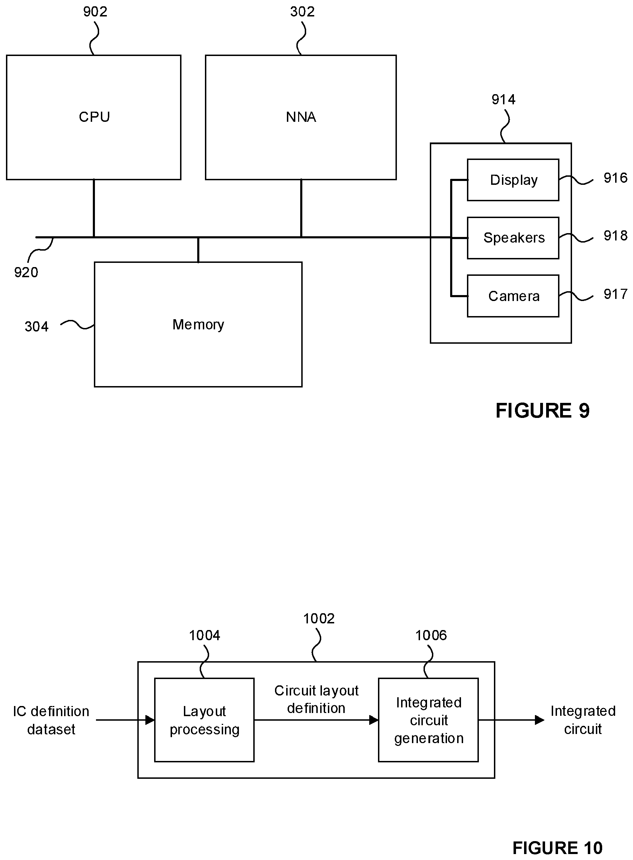

Figure 9 shows a computer system in which a data processing system as described herein may be implemented. The data processing system comprises a CPU 902, an accelerator 302 (which is labelled in the figure as a neural network accelerator, NNA), a system memory 304 and other devices 914, such as a display 916, speakers 918 and a camera 922. The components of the computer system can communicate with each other via a data bus 920. At least some of the control logic 324 and/or iteration logic 342 and/or transformation unit 326 may be supported at the CPU 902.

Sequential Forward-Backward/Backward-Forward Networks

In conventional (parallel) BRNNs, the forward and backward operations are necessarily independent, with the forward and backward operations typically operating on a common input sequence. There exist other types of bidirectional recurrent neural networks which comprise forward operations performed in dependence on state generated at a preceding time step, and backward operations which comprise forward operations performed in dependence on state generated at a preceding time step, but where the forward and backward operations in respect of a given time step are not independent - i.e. the input to the operations of the BRNN in one direction (e.g. backward operations) depend on the output from the operations in the opposite direction (e.g. forward operations). Such BRNNs are referred to herein as 'Sequential BRNNs' because the forward and backward operations in respect of a given time step need to be performed in a particular order. As such, it will be understood that whilst a sequential BRNN comprises individual forward and backward RNNs for operation on respective state over the inputs to the sequential BRNN, within the sequential BRNN itself the inputs to the sequential BRNN are directed to the input of only a first one of the forward and backward RNNs, with the output from that first one of the forward or backward RNNs being directed to the input to the other one of the forward and backward RNNs.

In a Sequential Forward-Backward Network, a forward RNN is arranged to operate on a sequence of inputs and a backward RNN is arranged to operate on the outputs from the forward RNN - the backward RNN cannot therefore be performed until processing of the forward RNN has completed over the full sequence of inputs. In a Sequential Backward-Forward Network, a backward RNN is arranged to operate on a sequence of inputs and a forward RNN is arranged to operate on the outputs from the backward RNN - the forward RNN cannot therefore be performed until processing of the backward RNN has completed over the full sequence of inputs. The outputs from the forward and backward RNN are combined in the same manner as described for derivative neural networks so as to form an output for the pair of forward and backward RNNs in respect of each input of the input sequence. In this document, Sequential Forward-Backward Networks and Sequential Backward-Forward Networks shall be collectively referred to as sequential neural networks, and are examples of sequential BRNNs.

Conventional and sequential BRNNs both comprise operations performed in both a forward direction and a backward direction in response to a sequence of inputs, and the results of the forward and backward operations are combined (e.g. concatenated together) for each input. This is different, for example, to linking the output of a first (e.g. forward) RNN cell to an input of a second (e.g. backward) RNN cell - in that case there is no concatenation of the individual outputs of the two cells.

The principles described herein for transforming BRNNs into derivative neural networks so as to enable implementation of the BRNN in hardware apply to both conventional and sequential BRNNs. It will be understood that, unless specified otherwise, references to a BRNN herein refer to both conventional and sequential BRNNs as defined in this section.

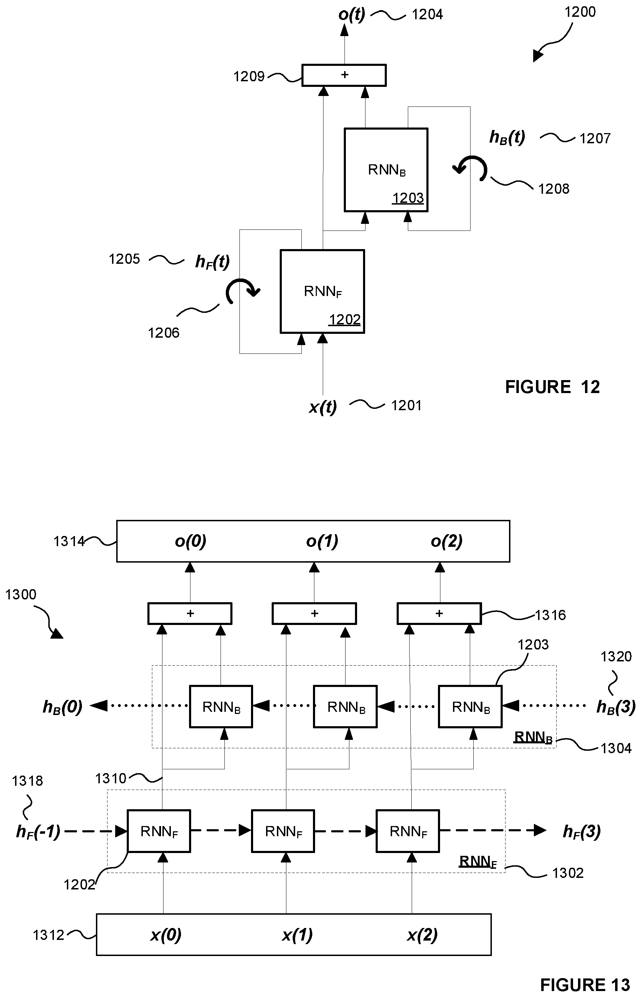

An exemplary sequential neural network 1200 (a Sequential Forward-Backward Network) is shown in Figure 12 in rolled-up form. The sequential neural network 1200 could be a layer of the BRNN shown in Figure 1 (e.g. BRNN1 or BRNN2). A forward RNN cell 1202 receives input data at time step t from a time series x(t) 1201 and processes the input in accordance with the set of calculations predefined for the cell. The processing at the forward RNN cell is further performed in dependence on forward state $h_F(t-1)$ generated during processing of the preceding input $x(t-1)$ at the forward RNN cell. In the figure, the state passed forward for use during processing of the next time step is shown as state $h_F(t)$ 1205 which is subject to a delay 1206 such that state $h_F(t)$ is provided to the forward RNN cell with input $x(t+1)$.

A backward RNN cell 1203 receives the output of the forward RNN cell as its input. The processing at the backward RNN cell is performed in dependence on backward state $h_B(t+1)$ generated during processing of the subsequent input $x(t+1)$ at the backward RNN cell. In the figure, state $h_B(t)$ 1207 is passed backward in time 1208 for use during processing of the preceding time step such that state $h_B(t)$ is provided to the backward RNN cell with input $x(t-1)$. The outputs from the forward and backward RNN cells are combined 1209 (e.g. concatenated) so as to form an output 1204 for the Sequential Forward-Backward Network.

A Sequential Backward-Forward Network is similarly configured but the order of the forward and backward RNNs is reversed such that a backward RNN cell receives input data from an input sequence and a forward RNN cell receives the output of the backward RNN cell as its input. The outputs from the backward and forward RNN cells are combined so as to form an output for the Sequential Backward-Forward Network.

Figure 13 shows the Sequential Forward-Backward Network of Figure 12 unrolled over an input sequence 1312 so as to generate an unrolled sequential neural network 1300. In the figure, the input sequence comprises three inputs. The unrolled forward RNN cells 1202 form a forward RNN 1302 which operates on the input sequence 1312 in dependence on forward state $h_F$. The outputs 1310 of the forward RNN cells are provided as inputs to respective backward RNN cells 1203 which form a backward RNN 1304. The network operations at the backward RNN cells are performed in dependence on backward state $h_B$. The outputs from the forward and backward cells operating in respect of each time step are combined 1316 to form output sequence 1314.

Predefined initial state values are typically used to initialise sequential neural networks. For example, at an initial time step (e.g. at t = 0) an initial forward state input 1318 is provided to the forward RNN; and at the final time step of the sequence of inputs on which the BRNN is to operate (e.g. at $t = t_{max}$) an initial backward state input 1320 is provided to the backward RNN. The initial forward and backward state values could, for example, be constants, learned initial state values, or all zeros.

Only one set of sequential forward and backward networks are shown in Figure 13 (i.e. a single BRNN layer). In general, any number of sequential forward and backward networks may be stacked together, comprising any number of forward networks and any number of backward networks.

Transforming BRNN type

In some examples, it can be advantageous to transform a BRNN from one type to another. For example, from a conventional BRNN into a sequential BRNN. The structure of a derivative neural network generated for a conventional BRNN in accordance with the principles herein may be modified to generate a Sequential Forward-Backward Network or Sequential Backward-Forward Network. For example, the transformation unit 326 may be configured to, on generating a pair of forward and backward neural networks in respect of a conventional BRNN layer, configure the derivative neural network such that the output of the neural network in one direction is provided as the input to the neural network operating in the opposite direction (i.e. instead of both the forward and backward networks receiving the same input in respect of a given time step). This can be advantageous when the source BRNN has a small number of stacked layers and low dimensionality.

Consider a derivative neural network formed according to the principles described herein and comprising N stacked pairs of forward and backward neural networks for operation on an input of a sequence of inputs, each cell of the forward and backward neural networks having a dimensionality (or hidden size) M. The derivative neural network can be modified to form a sequential neural network comprising N stacked sets of sequential forward and backward neural networks for operation on an input of a sequence of inputs, each cell of the sequential forward and backward neural networks having a dimensionality (or hidden size) M. When applied to the same sequence of input data, the accuracy of the sequential neural network is typically higher than that of the derivative neural network. This is illustrated in Table 1 below. However, as the number of of stacks and the dimensionality increase , the accuracy of a derivative neural network can approach that of a sequential neural network. For certain applications where a sequential neural network can offer better performance in other respects, it can therefore be advantageous to make use of a sequential neural network.

Table 1

| No. stacks (N) / Dimensionality (M) | 1/1 | 1/8 | 1/16 | 2/1 | 2/8 | 2/16 |
|---|---|---|---|---|---|---|
| **Bidirectional Recurrent Network** | 35.68 | 95.47 | 97.58 | 40.15 | 97.47 | 98.43 |
| **Sequential Forward-Backward Network** | 37.23 | 95.86 | 97.75 | 43.05 | 97.59 | 98.41 |

(continued)

| No. stacks (N) / Dimensionality (M) | 1/1 | 1/8 | 1/16 | 2/1 | 2/8 | 2/16 |
|---|---|---|---|---|---|---|
| Sequential Backward-Forward Network | 42.62 | 97.53 | 98.14 | 50.83 | 97.68 | 98.40 |

Number Format Selection

The exemplary BRNN shown in Figure 1 defines operations to be performed on an element **x(t)** of an input sequence and state variables **h(t-1)** at each timestep **t,** to generate state variables **h(t)** and an output **o(t).** The function defined by these operations is fixed over time: for the same values of the input and state variables, the output will be the same regardless of time index. This is a desirable property that may be referred to as time invariance. For reasons of efficiency, block-configurable number formats may be defined for values in the network as described below. These number formats should be the same across time to preserve time invariance, and this should be taken into account when selecting number formats so that the chosen formats are suitable for all timesteps.

BRNNs differ from feed-forward (static) neural networks in that the same graph is repeated over a number of inputs (e.g. over a time series). Furthermore, BRNN cells receive a forward state tensor generated at a preceding step of the BRNN and a backward state tensor generated at a following step of the BRNN, neither of which will not be known at design time. In order to ensure that the behaviour of the network is consistent across time, every step of a derivative neural network derived according to the principles described herein should behave in the same way given the same inputs, irrespective of the position of the step in the sequence of steps over which the derivative network operates. Whether the behaviour of the network is time invariant is in part determined by the number formats of the data values involved in the operations performed by the RNN.

The values of an RNN may include the elements of any tensors of the network - for example, input values (e.g. as elements of input tensors representing a time series or the output of a lower cell in a stack of cells of a BRNN); weight values (e.g. as elements of weight tensors representing parameters of the network); state values (e.g. as elements of forward and backward state tensors); and intermediate tensors representing values between operations of the network. The values of a BRNN may be referred to herein as the network values. In a hardware implementation of a BRNN, suitable number formats need to be chosen for all of the values of the network. The number format or at least some parameters of the number format of some values may be predefined. The number format of some or all values of the network may be determined in accordance with the number format selection methods described herein.

Each iteration of a BRNN over its sequence of inputs includes an instance of every value of the network (e.g. the elements of the tensors of the BRNN). Thus, iterating a BRNN N times generates N instances of its network values. In order to ensure time invariance, all instances of a value in the network should have the same number format. A method of selecting number formats will now be described for use when implementing a BRNN in hardware, in particular when implementing a BRNN in hardware in accordance with the principles described above (e.g. at the data processing system shown in Figure 3).

As is known to those of skill in the art, for hardware to process a set of values, those values must be represented in a number format. Two types of number formats are fixed point number formats and floating point number formats. A fixed point number format has a fixed number of digits after the radix point (e.g. decimal point or binary point). In contrast, a floating point number format does not have a fixed radix point (i.e. it can "float"). In other words, the radix point can be placed anywhere within the representation. While representing input data values and weights in a floating point number format may allow more accurate or precise output data to be produced, processing numbers in a floating point number format in hardware is complex which tends to increase the silicon area and complexity of the hardware compared to hardware that processes values in fixed point number formats. Accordingly, hardware implementations may be configured to process input data values and weights in a fixed point number format to reduce the number of bits required to represent the values of the network and hence reduce silicon area, power consumption and memory bandwidth of the hardware implementation.

A number format type defines the parameters that form a number format of that type and how the parameters are interpreted. For example, one example number format type may specify that a number or value is represented by a b-bit mantissa m and an exponent *exp* and the number is equal to $m * 2^{exp}$. As described in more detail below, some number format types can have configurable parameters, which may also be referred to as quantisation parameters, that can vary between number formats of that type. For example, in the example number format described above the bit width b and the exponent *exp* may be configurable. Accordingly, a first number format of that type may use a bit width b of 4 and an exponent *exp* of 6, and a second, different, number format of that type may use a bit width b of 8 and an exponent *exp* of -3.

The accuracy of a quantised BRNN (i.e. a version of the BRNN in which at least a portion of the network values are represented by a non-floating point number format) may be determined by comparing the output of such a BRNN in response to input data to a baseline or target output. The baseline or target output may be the output of an unquantized version of the BRNN (i.e. a version of the BRNN in which all of the network values are represented by a floating point number format, which may be referred to herein as a floating point version of the BRNN or a floating point BRNN) in response to the same input data or the ground truth output for the input data. The further the output of the quantised BRNN is from the baseline or target output, the less accurate the quantised BRNN. The size of a quantised BRNN may be determined by the number of bits used to represent the network values of the BRNN. Accordingly, the lower the bit depths of the number formats used to represent the network values of a BRNN, the smaller the BRNN.

While all the network values (e.g. input data values, weight, biases and output data values) of a BRNN may be represented using a single number format this does not generally produce a BRNN that is small in size and accurate. This is because different operations of a BRNN tend to operate on and generate values having different ranges. For example, one operation may have input data values between 0 and 6 whereas another operation may have input data values between 0 and 500. Accordingly using a single number format may not allow either set of input data values to be represented efficiently or accurately. Accordingly, the network values of a BRNN may be divided into sets of two or more network values and a number format may be selected for each set. Preferably each set of network values comprises related or similar network values.

Each set of network values may be all or a portion of a particular type of network value for an operation. For example, each set of network values may be all or a portion of the input data values of an operation; all or a portion of the weights of an operation; all or a portion of the biases of an operation; or all or a portion of the output data values of an operation. Whether or not a set of network values comprises all, or only a portion, of the network values of a particular type for a cell may depend on, for example, the hardware that is to implement the BRNN and the application of the BRNN - e.g. identifying number formats on a per filter basis in a convolution weight tensor can increase output accuracy in some cases. For example, some hardware that can be used to implement a BRNN may only support a single number format per network value type per operation, whereas other hardware that can be used to implement a BRNN may support multiple number formats per network value type per operation.

Hardware for implementing a BRNN, such as accelerator 302, may support one type of number format for the network values. For example, hardware for implementing an RNN may support number formats wherein numbers are represented by a b-bit mantissa and an exponent *exp*. To allow different sets of network values to be represented using different number formats, hardware for implementing an RNN may use a type of number format that has one or more configurable parameters, wherein the parameters are shared between all values in a set of two or more values. These types of number formats may be referred to herein as block-configurable types of number formats or set-configurable types of number formats. Accordingly, non-configurable formats such as INT32 and floating point number formats are not block-configurable types of number formats. Example block-configurable types of number formats are described below. The methods described herein may be performed so as to identify appropriate block-configurable types of number formats for two or more values of a BRNN.

One example block-configurable type of number format which may be used to represent the network values of a BRNN is the Q-type format, which specifies a predetermined number of integer bits *a* and fractional bits b. Accordingly, a number can be represented as *Qa. b* which requires a total of *a* + *b* + 1 bits (including the sign bit). Example Q formats are illustrated in Table 1 below. The quantisation parameters for the Q-type format are the number of integer bits *a* and the number of fractional bits b.

Table 1

| Q Format | Description | Example |
|----------|-------------|---------|
| Q4.4 | 4 integer bits and 4 fractional bits | 0110.11103 |
| Q0.8 | 0 integer bits and 8 fractional bits | .011011103 |

However, the Q format has a shortcoming in that some of the bits used to represent the number may be considered to be redundant. In an example, a number range [-0.125, 0.125) is to be represented to a precision of 3 bits. The required Q format for this example range and precision is Q0.5. However, if we assume that the range of values is known in advance, the first two bits of the number will never be used in determining the value represented in Q format. For example, the first two bits of the representation do not contribute to the final number since they represent 0.5 and 0.25 respectively and therefore fall outside of the required range. However, they are used to indicate the value of the third bit position (i.e. 0.125 and beyond due to the relative bit positions). Accordingly, the Q format described above is an inefficient fixed point number format for use within a hardware implementation of a neural network since some bits may not convey useful information.

Another example block-configurable type of number format which may be used to represent network parameters of a BRNN is one in which number formats of this type are defined by a fixed integer exponent *exp* and a b-bit mantissa m such that a value *u* is equal to $u = 2^{exp}m$. In some cases, the mantissa m may be represented in two's complement format.

However, in other cases other signed or unsigned integer formats may be used. In these cases the exponent *exp* and the number of mantissa bits b only need to be stored once for a set of two or more values represented in that number format. Different number formats of this type may have different mantissa bit lengths b and/or different exponents *exp* thus the quantisation parameters for this type of number format comprise the mantissa bit length b (which may also be referred to herein as a bit width, bit depth or bit length), and the exponent *exp.*

Another example block-configurable type of number format which may be used to represent the network parameters of a BRNN is the 8-bit asymmetric fixed point (Q8A) type format. In one example, number formats of this type comprise a minimum representable number *rmin*, a maximum representable number *rmax*, a zero point z, and an 8-bit number *dQ8A* for each value in a set which identifies a linear interpolation factor between the minimum and maximum representable numbers. In other cases, a variant of this type of format may be used in which the number of bits used to store the interpolation factor *dQbA* is variable (e.g. the number of bits b used to store the interpolation factor may be one of a plurality of possible integers). In this example the Q8A type format or a variant of the Q8A type format may approximate a floating point value *dfloat* as shown in equation (3) where b is the number of bits used by the quantised representation (i.e. 8 for the Q8A format) and z is the quantised zero point which will always map exactly back to 0. The quantisation parameters for this example type of number format comprise the maximum representable number or value *rmax,* the minimum representable number or value *rmin,* the quantised zero point z, and optionally, the mantissa bit length b (i.e. when the bit length is not fixed at 8).

$$d_{float} = \frac{(r_{max} - r_{min})(d_{QbA} - z)}{2^b - 1} \quad (3)$$

In another example the Q8A type format comprises a zero point z which will always map exactly to 0.f, a scale factor *scale* and an 8-bit number *dQ8A* for each value in the set. In this example a number format of this type approximates a floating point value $d_{float}$ as shown in equation (4). Similar to the first example Q8A type format, in other cases the number of bits for the integer or mantissa component may be variable. The quantisation parameters for this example type of number format comprise the zero point z, the scale *scale,* and optionally, the mantissa bit length b.

$$d_{float} = \left(d_{Q8A} - z\right) * scale \quad (4)$$

Determining a number format of a specific block-configurable type of number format may be described as identifying the one or more quantisation parameters for the type of number format. For example, determining a number format of a number format type defined by a b-bit mantissa and an exponent *exp* may comprise identifying the bit width b of the mantissa and/or the exponent *exp.* The particular type of block-configurable number format may be predefined for a given network value.

To reduce the size, and increase the efficiency, of a hardware implementation of a BRNN the hardware implementation may be configured to process data values in block-configurable number formats. Generally the fewer bits that are used to represent the network values of a BRNN (e.g. its input data values, weights, and output data values), the more efficiently the BRNN can be implemented in hardware. However, typically the fewer bits that are used to represent the network values of a BRNN the less accurate the BRNN becomes. Accordingly, it is desirable to identify number formats for representing the network values of the BRNN that balance the number of bits used to represent the network values and the accuracy of the BRNN. Furthermore, since the range of input, weight and state data values may vary, a hardware implementation may be able to process a BRNN more efficiently when the block-configurable number formats used to represent the data values can vary for each set of values (e.g. each tensor of the network). For example, the hardware implementation may be able to implement the BRNN more efficiently and/or more accurately by using a block-configurable number format defined by an exponent of 2 and a mantissa bit length of 6 to represent one set of values in the network, and a block-configurable number format defined by an exponent of 4 and a mantissa bit length of 4 to represent another set of values in the network.

Methods for determining a block-configurable type of number format for a set of two or more values of a BRNN will now be described. A set of two or more values of a BRNN may comprise part or all of one or more tensors. For example, the methods herein may be applied to determine a number format for some or all of the values of a tensor with different number formats being identified for different sets of two or more values (e.g. different tensors or parts of tensors). Different number format selection algorithms could be used to identify number formats for different sets of two or more values.

The methods described herein may be used with any suitable number format selection algorithm, including, for example, backpropagation format selection, greedy line search and end-to-end format selection, orthogonal search format selection, maximal range (or "MinMax") format selection, outlier rejection format selection, error-based heuristic format selection (e.g. based on a sum of squared errors with or without outlier weighting), weighted outlier format selection, or gradient weighting format selection algorithms. In particular, the methods described herein may be used with the particular format selection algorithms disclosed in UK Patent Applications with publication numbers 2568083, 2568084, 2568081, or UK Patent Application number 2009432.2.

In order to select number formats for the network values of a BRNN implemented according to the principles described herein, the derivative neural network representing the BRNN is performed on sample input data so as to provide statistics to a number format selection algorithm. Such statistics may be, for example, one or more of network values, mean/variance of network values, minimum/maximum network values, histograms summarising network values, gradients calculated with respect to the network output or a measure of error based on the network output, and any other data used or generated by the neural network or logic monitoring the neural network (e.g. format selection unit 344) which is required by the format selection algorithm. In some examples, the derivative neural network is performed using a floating point number format for the values of the network. For example, the derivative neural network may be performed in software using a floating point number format for the input data, weights, state and output data values in the network. 32-bit or 64-bit floating point number formats perform well because the number format should generally be as close to lossless as possible for best results, but it can be possible to use a block-configurable number format with a large range / large number of bits.

The derivative neural network may be executed in any suitable manner in order to perform number format selection. For example, the derivative neural network may be performed in software (e.g. using a deep learning framework such as TensorFlow with software support for executing dynamic graphs, or as a static graph representing a single timestep which is run for every timestep in a sequence, with number formats being selected for the network values based on statistics gathered on each run), or in hardware (e.g. at an accelerator such as accelerator 302).

As described above, the derivative neural network comprises, for each layer of the BRNN it represents, forward and backward neural networks unrolled over the sequence of inputs over which the BRNN is to operate, and optionally one or more non-causal layers and/or combination operations for combining the outputs of the forward and backward neural networks. When an RNN is unrolled, the same tensor will appear at each time step as an instance of that tensor. In order to achieve time invariance and for the derivative neural network comprising forward and backward unrolled RNNs to be equivalent to the original BRNN, all instances of the same tensor need to have the same format over the unrolled RNNs. For example, in the unrolled derivative network shown in Figure 5 in the case that the block-configurable number formats correspond to tensors, all of the input tensors x(t) have the same number format, all of the forward state tensors $h_{1F}(t)$ have the same number format, and all of the backward state tensors $h_{1B}(t)$ have the same number format. Different state tensors may have different number formats and the inputs and outputs to RNN cells corresponding to different layers of the original BRNN may have different number formats (e.g. forward and backward RNNs 524 and 526 correspond to a first layer of the BRNN and forward and backward RNNs 528 and 530 correspond to a second layer of the BRNN).

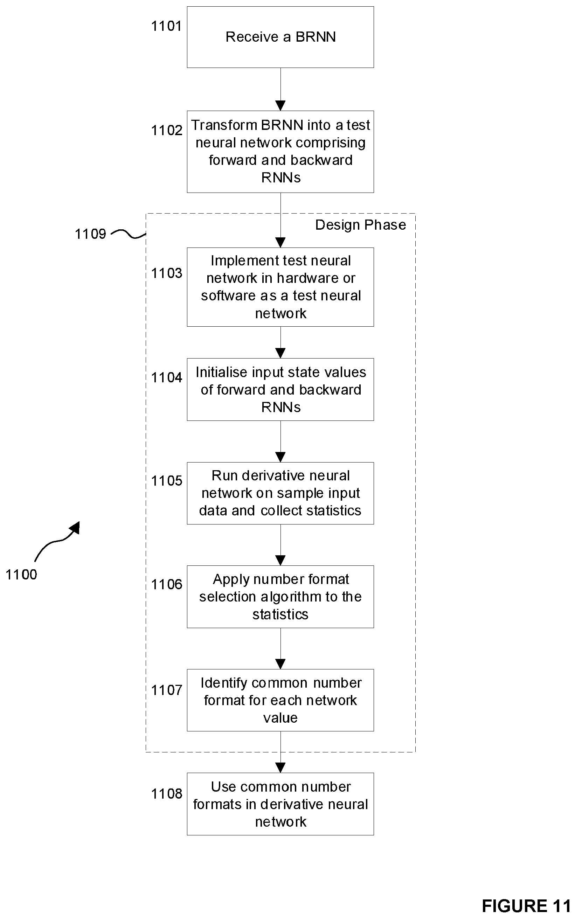

Figure 11 illustrates a method of performing number format selection for two or more values of a derivative neural network derived according to the principles described herein. The two or more values may comprise some or all of the elements of one or more tensors of the derivative neural network. The method may be performed on receiving a BRNN 1101 (e.g. a conventional or sequential BRNN) for implementation in hardware - for example, at the accelerator 302 of the data processing system in Figure 3. The method may be performed in a design phase 1109 prior to implementation of the BRNN in hardware according to the principles described herein or otherwise. The format selection of the design phase 1109 identified in Figure 11 could be performed under the control of format selection unit 344 shown in Figure 3. In some examples, the format selection unit 344 could be one and the same as the transformation unit 326.

At a first step 1102, the BRNN is transformed (e.g. at transformation unit 326) in accordance with the principles described herein into a derivative neural network comprising a forward RNN and a backward RNN (and optionally other layers such as non-causal layers and/or layers configured to combine output values from the forward and backward RNNs). The derivative neural network is unrolled over a test number of steps in the manner described above with respect to steps 804 and 806 in Figure 8. The test number of steps may be different to the number of steps over which the derivative neural network is to operate when implemented in hardware once number format selection has been performed.

The derivative neural network unrolled over the test number of steps is then implemented 1103 in hardware or software as a test neural network so as to enable statistics to be gathered for the number format selection algorithm. The derivative neural network may be implemented as a test neural network in any suitable manner. The test neural network is performed over the plurality of test time steps on sample input data so as to capture the statistics required by the number format selection algorithm. The number of test time steps may be different to (e.g. fewer than) the number of time steps over which the BRNN is to be operated. Often good performance can be achieved by performing only a small number of time steps. The test neural network may be run in any way that is functionally correct and outputs the data needed by the format selection method. In some examples the test neural network is one and the same as the derivative neural network.

In some examples, the test neural network may be implemented in software - for example at software comprised at the format selection unit 344 running at a CPU (e.g. CPU 902 of the computer system shown in Figure 9). For example, the network could be run in TensorFlow or PyTorch and the maximum absolute values of all sets of two or more values can be output for use by a MinMax format selection algorithm. The number format selection in design phase 1109 need not be performed at the same computing system at which the derivative neural network is to be ultimately implemented in hardware. In some examples, the test neural network is implemented in hardware to select appropriate number formats - for example, at accelerator 302 in data processing system 300.

The hardware (and its associated logic, such as control logic 324) should be capable of executing the network at a high enough precision to avoid significant quantisation errors (e.g. in 32-bit floating point) and providing suitable statistics. In some examples, the test neural network may be implemented at the hardware accelerator 302 for the purpose of selecting number formats for the values of the network in accordance with the principles described herein.

The test neural network represents all or a portion of the complete unrolled derivative neural network which is to be implemented in hardware so as to perform the BRNN over a predefined sequence of inputs. In some examples, the test neural network may be iterated until acceptable number formats are identified, with the forward and backward state outputs from each iteration of the test neural network being provided as the forward and backward state inputs to the next iteration of the test neural network. It is advantageous however if the number of test steps over which the derivative neural network is unrolled to form the test neural network is at least the number of test steps which it is expected need to be performed in order to perform number format selection for the derivative neural network. This avoids the need to iterate the test neural network and enables number formats to be identified according to the selection algorithm being used from the application of a single instance of the test neural network. In some examples, the test number of steps is the same as the predefined number of inputs over which the received BRNN is to operate.

The input forward and backward state tensors of the test neural network are initialised at 1104. The initial forward and backward state tensors of a neural network may be different from the typical forward and backward state tensors at subsequent time steps. Because the first time step of the test neural network is often exceptional, suitable number formats cannot usually be selected based on the first time step alone. The initial state tensors are preferably the same initial state tensors for use when implementing the BRNN in hardware as the derivative neural network described above. It is important that the number formats work for both the first time step and for subsequent time steps. It is therefore advantageous to perform number format selection over a plurality of test time steps which include the first time step. The initialisation of state tensors can result in a transient effect in the first few time steps before the network settles into its steady-state behaviour. The initialisation step 1104 will typically be performed with the implementation step 1103 as part of the implementation of the test neural network.

In order to perform number format selection, the test neural network is performed 1105 on suitable sample input data so as to enable appropriate statistics to be captured for use in the number format selection algorithm. The test neural network is executed for a predetermined number of one or more time steps so as to generate the statistics at each time step which are required by the number format selection algorithm. Suitable sample input data could comprise exemplary data selected to represent a typical or expected range of inputs to the derivative neural network to be implemented in hardware. In some examples, the sample input data may be input data from the actual source to which the derivative neural network will be applied - e.g. an audio signal on which speech recognition is to be performed.

It is well known in the art to capture statistics from neural networks and it will be appreciated that the particular nature of the statistics will depend on the nature of the neural network, its application and the requirements of the number format selection algorithm being used. The statistics (e.g. data values, maximums/minimums, histogram data) generated at the test neural network and/or logic associated with the test neural network (e.g. at format selection unit 344) may be captured in any suitable manner. For example, in the case that the test neural network is implemented in software running at CPU 902 in Figure 9, the statistics may be stored at memory 304 for concurrent or subsequent processing by the format selection unit 344 (which may also be running at the CPU). In some examples, at least some of the statistics comprise intermediate data values generated at the test neural network (e.g. between stacked test neural network cells and/or operations of a test neural network cell).

At step 1106, a number format selection algorithm is applied to the statistics collected from the operation of the test neural network. The number format selection algorithm may run concurrently with the test neural network and/or may be subsequently performed on the captured statistics. The format selection of the design phase 1109 may be performed at the format selection unit 344. The number format selection algorithm may be any algorithm for identifying block-configurable number format for the sets of two or more network values. The particular choice of algorithm is typically determined by one or more of: the application to which the BRNN represented by the derivative neural network is to be applied; the nature of the tensors to which the two or more values it operates on belong; and the amount of time and/or compute resources required to run the algorithm (more complex algorithms might give better results but might take several times longer to run).

Number format selection is performed subject to the constraints that all instances of the same tensor in the unrolled test neural network (and hence the corresponding tensors in the derivative neural network) must have the same number format. Thus, all instances of a particular state tensor (e.g. forward state tensor $h_{1F}$ in Figure 5) must have the same number format but different state tensors (e.g. forward state tensor $h_{1F}$ and forward state tensor $h_{2F}$, or forward state tensor $h_{1F}$ and backward state tensor $h_{1B}$) may have different number formats. Furthermore, the outputs of the forward and backward cells (e.g. 512 and 514) of a given pair of forward and backward neural networks (e.g. 524 and 526) representing a layer of the BRNN must have the same format so as to allow combination of those outputs.

In the present examples in which the number format is selected from block-configurable types of number format, the number of bits of the exponent may be fixed (e.g. 6 bits signed). The exponent length need not therefore be stored with each data value and may instead be defined for groups of data values - for example, an exponent length may be predefined for each tensor of the test neural network, for sets of two or more elements of each tensor, for each type of tensor (e.g. different exponent lengths for inputs and/or weights and/or outputs), for groups of tensors, or for all of the tensors of the test neural network. The amount of data required to store the exponent and the length of the mantissa (e.g. the number of bits required to store the number format) may be fixed and negligible compared to the number of bits required to store the actual mantissas of the network values. The number of mantissa bits is therefore the primary determinant of the number of bits required to represent the number formats of the network values.

Number format selection algorithms may determine the length (e.g. in bits) of the mantissa of a block-configurable type of number format. For example, where each block-configurable number format used by a test neural network to represent data values comprises an exponent and a mantissa bit length, the mantissa bit length of the block-configurable number format used by the cell attributed the lowest portion of the quantisation error may be reduced, or the mantissa bit length of the block-configurable number format used by cell attributed the highest portion of the quantisation error may be increased. The quantisation error of a data value is the difference between the data value in an original floating point number format (i.e. as used in the implementation of the test neural network for number format selection purposes) and the data value in the block-configurable number format (i.e. as proposed for use in the hardware implementation of the derivative neural network).

Several methods have been developed for identifying number formats for representing network values of a test neural network. One simple method (which may be referred to herein as the full range method or the minimum/maximum or MinMax method) for selecting a number format for representing a set of network parameters of a test neural network may comprise selecting, for a given mantissa bit depth $n$ (or a given exponent $exp$), the smallest exponent $exp$ (or smallest mantissa bit depth $n$) that covers the range for the expected set of network values $x$ for a operation. For example, for a given mantissa bit depth b, the exponent $exp$ can be chosen in accordance with equation (5) such that the number format covers the entire range of $x$ where $\lceil . \rceil$ is the ceiling function:

$$exp = \lceil \log_2(\max(|x|)) \rceil - n + 1 \quad (5)$$

However, such a method is sensitive to outliers. Specifically, where the set of network values x has outliers, precision is sacrificed to cover the outliers. This may result in large quantisation errors (e.g. the error between the set of network values in a first number format (e.g. floating point number format) and the set of network values in the selected number format). As a consequence, the error in the output data of the operation and/or of the test neural network caused by the quantisation, may be greater than if the number format covered a smaller range, but with more precision.

In other examples, a sum of squared errors algorithm with outlier weighting may be used. This algorithm can be appropriate where relatively important values are typically those at the higher end of the range of values of a given set of two or more values. This is particularly true for weight tensors that are regularised by penalising their magnitude and so we might expect elements with higher values to have greater relative importance than lower. Also, clamping is a particularly destructive form of noise that can introduce a strong bias in the resulting quantised set of two or more values. Therefore in some applications it can be advantageous to bias the error towards retaining large values, whilst avoiding the extreme of preserving the full range at the expense of quantisation error (e.g. as in the "MinMax" method). For example, a weighting function $\alpha(x)$ as shown in equation (6) below combined with a squared measure of error could be used in a sum of squared errors algorithm.

$$\alpha(x) = \begin{cases} 1 + \dfrac{\gamma x}{SAT - \delta_e}, & for\ x > SAT - \delta_e \\ 1 + \dfrac{\gamma |x|}{SAT}, & for\ x < -SAT \\ 1, & otherwise \end{cases}$$

$$(6)$$

Where SAT is a saturation point defined as $2^{exp+n-1}$, $exp$ is the exponent of the fixed number format, n is the number of bits of the mantissa, $\delta_e$ is $2^{exp}$ (i.e. one quantisation level), and y is the gradient which is chosen empirically. A gradient of 20 can work well for some neural networks.

A weighted outlier method is described in the Applicant's GB Patent Application No. 1718293.2. In the weighted outlier method the number format for a set of network values is selected from a plurality of potential number formats based on the weighted sum of the quantisation errors when a particular number format is used, wherein a constant weight is applied to the quantisation errors for network values that fall within the representable range of the number format and a linearly increasing weight is applied to the quantisation errors for the values that falls outside the representable range.

Yet another method (which may be referred to as the back-propagation method) is described in the Applicant's GB Patent Application No. 1821150.8. In the back-propagation method the quantisation parameters that produce the best cost - e.g. a combination of accuracy and neural network size (e.g. number of bits) - are selected by iteratively determining the gradient of the cost with respect to each quantisation parameter using back-propagation, and adjusting the quantisation parameters until the cost converges. This method can produce good results (e.g. a neural network that is small in size (in terms of number of bits), but is accurate), however it can take a long time to converge.

In general, the selection of number formats may be conceived of as an optimisation problem which could be performed on one, some or all of the parameters of the number formats in the test neural network. In some examples, a plurality of parameters of the number formats may be optimised simultaneously; in other examples, one or more parameters of the format selection method may be optimised in turn. In some examples, the bit depths of the network values may be predefined with the format selection algorithm being applied so as to select suitable exponents for the network values of the test neural network. The bit depths of the network values may be fixed or in some examples may be a parameter to be optimised. In some examples, applying 1106 the number format selection algorithm may comprise identifying appropriate bit depths for the values of the test neural network. In order to ensure that each time step of the test neural network is identical, instances of two or more values at different time steps of the test neural network are constrained to have the same bit depth. For example, each instance of the forward state tensor $h_{1F}(t)$ has the same bit depth and each instance of the input tensor x(t) has the same bit depth.

As has been described, the test neural network is operated at step 1105 on sample input data over a predefined number of time steps without any (or minimal) quantisation of its network values in order to capture the statistics at each time step which are required by the format selection method. The format selection method is applied 1106 to the statistics captured at each time step of the test neural network to select optimal number formats for the network values of the test neural network. The number format selection algorithm may be chosen and/or configured so as to identify a block-configurable type of number format for each network value for which a number format is to be determined. As is explained above, typically the block-configurable number format identified by the algorithm will be expressed as a set of one or more parameters defining the type of block-configurable number format to which the block-configurable number format belongs.

The number format selection may be performed for a set of two or more network values on the statistics captured at one or more time steps. The number format selection may be performed for a set of two or more network values on statistics captured over more than one sequence of time steps, for example by applying the test neural network to a first sequence of sample inputs and then to a second sequence of sample inputs. A number format selection algorithm may be applied to all of the statistics captured over multiple sequences of time steps so as to identify a single common number format for a set of two or more network values in the manner described herein, or a number format selection algorithm may be independently applied to the statistics captured over different sequences of time steps, with the number formats identified in respect of each sequence being combined in accordance with methods described herein so as to identify a single common number format for a set of two or more network values. This can help to ensure generality of the common number format identified for each set of two or more network values.

In some examples, the format selection algorithm is independently applied 1106 to the statistics captured at each time step (or a subset of the time steps for which statistics are captured) so as to identify a number format for each instance of a network value at each (or those) time step(s), the number formats for those instances then being combined to identify a common number format for the network value over all of the time steps 1107. In other examples, the format selection algorithm is (e.g. concurrently) applied 1106 to the statistics captured over all of the predefined number of time steps for which the test neural network is performed so as to identify 1107 a common number format for a given network value over all of the time steps (i.e. every instance of the network value) over which the RNN is performed. In such examples, the format selection algorithm identifies 1107 a common number format for use over all of the instances of the respective network value in the derivative neural network when implemented in hardware.

Where the format selection algorithm is simultaneously applied to the statistics captured over all of the predefined number of time steps for which the test neural network is performed, the output of the format selection algorithm may be a single common number format for the network value. For example, the statistics captured on running the test neural network on sample input data may comprise capturing at each time step the maximum absolute values of a set of two or more values of the test neural network. The format selection algorithm may then comprise combining the maximum absolute values by taking the maximum of the captured maximum absolute value at each time step and performing a MinMax algorithm on that maximum so as to identify the parameters of a common block-configurable number format for that set of values.

As explained above, in order to ensure time invariance over the time steps performed in a hardware implementation of the RNN, each instance of a network value (i.e. the network value at each time step) must have the same number format. Where the format selection algorithm is performed a plurality of times on the statistics captured for the predefined number of time steps (e.g. the format selection algorithm is independently applied to the statistics captured at each time step or a subset of the time steps), the format selection algorithm may identify more than one number format for each network value. In other words, different number formats may be identified for instances of the same set of values at different time steps. In this case, the resulting number formats are combined so as to identify 1107 a common number format for each network value of the test neural network. This common number format can be used for all of the instances of the respective network value in the derivative neural network when implemented in hardware.

A block-configurable number format may be represented as a set of one or more parameters which define the number format - e.g. a first integer value may represent the exponent, and a second integer value may represent the mantissa bit depth. Each parameter may be independently combined so as to form a common number format. For example, integer parameters expressing the number formats established for the instances of a tensor may be combined by identifying a median, minimum, maximum, or mean (e.g. the integer value closest to the mean) integer value which may then be used as the respective parameter of the common number format. Using the median value of the exponents of the number formats of each set of instances has been found to offer good accuracy.

Consider the particular example where the number formats established for the instances of a network value are defined by an integer parameter defining the exponent of a block-configurable number format. In this example, a number format may be independently identified by a format selection algorithm for a network value at each of four iterations of the RNN. If the identified number formats have the exponents 5, 6, 5, 4 then the median exponent is 5 and the common number format may be identified as the number format having the exponent 5.

Once a common number format has been established, the common number format may be used 1108 in a hardware implementation of the derivative neural network. For example, the common number formats may be provided to the transformation unit 326 of the data processing system shown in Figure 3 for use in the derivative neural network. The same common number format identified for a network value of the test neural network is used for all instances of that network value in the derivative neural network. For example, a common number format established for the input tensor x of the test neural network is used as the number format for all instances of the input tensor of the derivative neural network, and the common number format established for the first state tensors $\mathbf{h_1}$ of the test neural network is used as the number format for all instances of the first state tensor of the derivative neural network.

As well as giving consistent behaviour across time, the method described herein also makes the selected formats more robust because information is pooled from across multiple time steps of the RNN. For example, if a certain tensor behaves differently at a given time step to the previous timesteps resulting in different number formats at those time steps, this approach has the potential to generalise this format to all other timesteps before and after it in the unrolled graph, meaning that those tensor values can be handled correctly should the unusual behaviour occur at a different point in the sequence.

The present method of performing number format selection for a derivative neural network representing a BRNN may be applied to neural networks in which the causal and non-causal parts are split in accordance with the principles described above. Since the causal and non-causal operations are performed separately, those operations are performed on different tensors whose common number formats may be independently selected according to the present method. This allows different number formats to be used for the causal and non-causal operations which can improve performance (e.g. inference speed) and/or enable a given level of performance to be achieved with lower memory and processing overheads.

In order to perform operations on combinations of values defined in different number formats, the number format of one or more of the values being combined may be converted to ensure that the values being combined have the same number format. For example, with reference to Figure 7, if the outputs 704 of the non-causal cell have a first number format, and the state inputs 706 have a second number format, the addition operations at the causal cells 604 may be configured to convert the outputs 704 and/or the state inputs 706 into the same (possibly third) number format. The conversion may be performed at the hardware, for example, at the accelerator 302 in data processing system 300.

It will be well known to the skilled person how to convert data values between number formats. For example, converting from one number format with mantissa $m_1$ and exponent $e_1$ to another with mantissa $m_2$ and exponent $e_2$ with the same bit depth may be performed as follows where the number formats differ in their exponent:

$$m_2 = \frac{m_1}{2^{e_2 - e_1}}$$

$$(7)$$

Such a conversion is subject to saturation and quantisation error, depending on whether $e_2$ is lower or higher than $e_1$.

The present method enables a different number format to be selected for sets of two or more values (e.g. tensors, parts of tensors, groups of tensors) of a derivative neural network. This enables the performance of the derivative neural network to be optimised. Independently performing number format selection in respect of different network values can give better results when the derivative neural network is performed in hardware by affording more flexibility for format selection.

General comments

The data processing system of Figure 3 is shown as comprising a number of functional blocks. This is schematic only and is not intended to define a strict division between different logic elements of such entities. Each functional block may be provided in any suitable manner. It is to be understood that intermediate values described herein as being formed by a computer system need not be physically generated by the computer system at any point and may merely represent logical values which conveniently describe the processing performed by the computer system between its input and output.

The accelerator described herein is embodied in hardware - for example, the accelerator may comprise one or more integrated circuits. The data processing system described herein may be configured to perform any of the methods described herein. Unless otherwise specified, the functions, methods, techniques or components described above can be implemented in software, firmware, hardware (e.g. fixed logic circuitry), or any combination thereof. The terms "module," "functionality," "component", "element", "unit", "block" and "logic" may be used herein to generally represent software, firmware, hardware, or any combination thereof. In the case of software, a module, functionality, component, element, unit, block or logic represents program code that performs the specified tasks when executed on a processor. Software described herein could be performed by one or more processors executing code that causes the processor(s) to perform the algorithms/methods embodied by that software. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in one or more of a machine language, an interpreted language, a scripting language, and a compiled high-level language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor to perform the tasks specified by the code.

A processor may be any kind of device, machine or dedicated circuit, or collection or portion thereof, with processing capability such that it can execute instructions. A processor may be any kind of general purpose or dedicated processor, such as a System-on-chip, an applicationspecific integrated circuit (ASIC), a programmable logic array, a field-programmable gate array (FPGA), or the like. A computing system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed in an integrated circuit manufacturing system configures the system to manufacture a computer system configured to perform any of the methods described herein, or to manufacture a computer system as described herein. An integrated circuit definition dataset may be, for example, an integrated circuit description.

There may be provided a method of manufacturing, at an integrated circuit manufacturing system, a computer system as described herein. There may be provided an integrated circuit definition dataset that, when processed in an integrated circuit manufacturing system, causes the method of manufacturing a computer system to be performed.

An integrated circuit definition dataset may be in the form of computer code, for example as a netlist, code for configuring a programmable chip, as a hardware description language defining an integrated circuit at any level, including as register transfer level (RTL) code, as high-level circuit representations such as Verilog or VHDL, and as low-level circuit representations such as OASIS (RTM) and GDSII. Higher level representations which logically define an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a computer system will now be described with respect to Figure 10.

Figure 10 shows an example of an integrated circuit (IC) manufacturing system 1002 which is configured to manufacture a computer system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a computer system as described in any of the examples herein), process the IC definition dataset, and generate an IC according to the IC definition dataset (e.g. which embodies a computer system as described in any of the examples herein). The processing of the IC definition dataset configures the IC manufacturing system 1002 to manufacture an integrated circuit embodying a computer system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiplestep sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a computer system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 10 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention, as defined by the appended claims.

**Claims**

1. A computer-implemented method of implementing in hardware a bidirectional recurrent neural network (BRNN) for operation on a sequence of inputs, each step of the BRNN being for operation on (a) an input of the sequence, (b) corresponding backward state generated in respect of a subsequent input of the sequence, and (c) corresponding forward state generated in respect of a preceding input of the sequence, the method comprising:

   receiving (801) a representation of the BRNN;
   transforming (802 - 811) the representation of the BRNN into a derivative neural network equivalent to the BRNN over the sequence of inputs, the derivative neural network comprising:

      a forward recurrent neural network (RNN) for operation on the forward state over the inputs of the sequence; and
      a backward recurrent neural network (RNN) for operation on the backward state over the inputs of the sequence;
      the forward and backward RNNs being unrolled over the inputs of the sequence

   wherein the transforming the representation of the BRNN into the derivative neural network comprises:

      identifying (808, 809) non-causal operations which are for performance without dependence on forward or backward state; and
      forming a non-causal layer of the derivative neural network by grouping together (810) at least some of the non-causal operations; and

   implementing (807) the derivative neural network in hardware so as to perform the BRNN on the sequence of inputs, wherein implementing the derivative neural network comprises causing the non-causal layer to process a plurality of inputs of the sequence of inputs in parallel at the hardware.

2. A method as claimed in claim 1, wherein each step of the derivative neural network is for operation on a different input of the sequence, and wherein the sequence of inputs comprises a predefined plurality of inputs.

3. A method as claimed in claim 2, wherein the transforming comprises either:

   unrolling the forward and backward RNNs over the predefined plurality of inputs prior to forming the derivative neural network in hardware; or
   unrolling the BRNN over the predefined plurality of inputs prior to forming the forward and backward RNNs.

4. A method as claimed in any preceding claim, wherein the forward and backward operations at each step of the BRNN are independent, each step of the forward RNN is for operation on an input of the sequence and its corresponding forward state, and each step of the backward RNN being for operation on an input of the sequence and its corresponding backward state.

5. A method as claimed in claim 4, wherein the implementing the derivative neural network comprises implementing the forward and backward RNNs for concurrent operation at the hardware so as to perform the forward and backward RNNs in parallel.

6. A method as claimed in any of claims 1 to 3, wherein the BRNN is a sequential BRNN and either:

each step of the forward RNN is for operation on an input of the sequence and its corresponding forward state, and each step of the backward RNN is for operation on the corresponding backward state and an output of the corresponding step of the forward RNN operating on the input of the sequence; or
each step of the backward RNN is for operation on an input of the sequence and its corresponding backward state, and each step of the forward RNN is for operation on the corresponding forward state and an output of the corresponding step of the backward RNN operating on the input of the sequence.

7. A method as claimed in any preceding claim, wherein the representation of the BRNN comprises a BRNN cell including forward operations and backward operations, and the non-causal operations are of the forward and/or backward operations.

8. A method as claimed in claim 4 or 5, wherein the identified non-causal operations are of the forward and backward RNNs.

9. A method as claimed in any preceding claim, wherein the grouping together comprises combining the at least some non-causal operations for performance as a single convolution operation over the plurality of inputs of the sequence of inputs.

10. A method as claimed in any preceding claim, wherein the transforming the BRNN further comprises configuring the derivative neural network such that the result of non-causal operations performed in respect of an input of the sequence of inputs is combined with the output of the forward and backward RNNs in respect of that same input, said combination being equivalent to the output of the BRNN in respect of that input.

11. A method as claimed in claim 4 or 5, wherein the implementing the derivative neural network in hardware comprises allocating forward and backward indices to each input of the sequence such that the forward RNN references its inputs using the forward index and the backward RNN references its inputs using the backward index, the forward and backward indices being arranged such that a first input of the sequence according to the forward index is the last input of the sequence according to the backward index, and a first input of the sequence according to the backward index is the last input of the sequence according to the forward index.

12. A method as claimed in any preceding claim, wherein the BRNN comprises a plurality of stacked layers each representing a bidirectional recurrent neural network, and the transforming the representation of the BRNN is performed in respect of each of the layers of the BRNN so as to generate a pair of forward and backward RNNs for each layer of the BRNN, each pair of forward and backward RNNs operating in dependence on corresponding forward and backward state of that pair.

13. A method as claimed in claim 12, wherein the transforming the BRNN further comprises configuring the derivative neural network such that, for each of the sequence of inputs, the outputs of the uppermost pair of forward and backward RNNs in respect of that input are combined so as to generate a combined output which is equivalent to the output of the BRNN in respect of that input.

14. A data processing system for implementing a bidirectional recurrent neural network (BRNN) for operation on a sequence of inputs, each step of the BRNN being for operation on (a) an input of the sequence, (b) corresponding backward state generated in respect of a subsequent input of the sequence, and (c) corresponding forward state generated in respect of a preceding input of the sequence, the system comprising:

a transformation unit (326) configured to receive a representation of the BRNN and transform the representation of the BRNN into a derivative neural network, the derivative neural network comprising:

a forward recurrent neural network (RNN) for operation on the forward state over the inputs of the sequence; and
a backward recurrent neural network (RNN) for operation on the backward state over the inputs of the sequence;
the forward and backward RNNs being unrolled over the inputs of the sequence;

the derivative neural network being equivalent to the BRNN for each of the sequence of inputs;
wherein the transformation unit is configured to transform the representation of the BRNN into the derivative neural network by:

identifying (808, 809) non-causal operations which are for performance without dependence on forward or backward state; and
forming a non-causal layer of the derivative neural network by grouping together (810) at least some of the non-causal operations;

a hardware accelerator (302) for processing neural networks; and
control logic (324) configured to implement the derivative neural network at the hardware accelerator so as to perform the BRNN on the sequence of inputs, wherein implementing the derivative neural network comprises causing the non-causal layer to process a plurality of inputs of the sequence of inputs in parallel at the hardware accelerator.

15. A method as claimed in any of claims 1 to 13, wherein the BRNN is for operation on an input stream divided up into overlapping or non-overlapping input sequences of a predefined length and the predefined length of each input sequence is selected in dependence on characteristics of an accelerator at which the derivative network is implemented in hardware.

**Patentansprüche**

1. Computerimplementiertes Verfahren zur Implementierung eines bidirektionalen rekurrenten neuronalen Netzwerks (BRNN) in Hardware zur Operation an einer Sequenz von Eingaben, wobei jeder Schritt des BRNN zur Operation an (a) einer Eingabe der Sequenz, (b) einem entsprechenden Rückwärtszustand, der in Bezug auf eine nachfolgende Eingabe der Sequenz erzeugt wird, und (c) einem entsprechenden Vorwärtszustand, der in Bezug auf eine vorhergehende Eingabe der Sequenz erzeugt wird, vorgesehen ist, wobei das Verfahren Folgendes umfasst:

Empfangen (801) einer Repräsentation des BRNN;
Transformieren (802-811) der Repräsentation des BRNN in ein abgeleitetes neuronales Netzwerk, das dem BRNN über die Sequenz von Eingaben entspricht, wobei das abgeleitete neuronale Netzwerk Folgendes umfasst:

ein vorwärtsgerichtetes rekurrentes neuronales Netzwerk (RNN) zur Operation an dem Vorwärtszustand über die Eingaben der Sequenz; und
ein rückwärtsgerichtetes rekurrentes neuronales Netzwerk (RNN) zur Operation an dem Rückwärtszustand über die Eingaben der Sequenz;
wobei das vorwärtsgerichtete und das rückwärtsgerichtete RNN über die Eingaben der Sequenz ausgerollt werden, wobei das Transformieren der Repräsentation des BRNN in das abgeleitete neuronale Netzwerk Folgendes umfasst:

Identifizieren (808, 809) nicht kausaler Operationen, die zur Durchführung ohne Abhängigkeit von dem Vorwärts- oder Rückwärtszustand vorgesehen sind; und
Bilden einer nicht kausalen Schicht des abgeleiteten neuronalen Netzwerks durch Gruppieren (810) mindestens einiger der nicht kausalen Operationen; und

Implementieren (807) des abgeleiteten neuronalen Netzwerks in Hardware, um das BRNN an der Sequenz von Eingaben durchzuführen, wobei das Implementieren des abgeleiteten neuronalen Netzwerks ein Veranlassen der nicht kausalen Schicht zur parallelen Verarbeitung einer Vielzahl von Eingaben der Sequenz von Eingaben auf der Hardware umfasst.

2. Verfahren nach Anspruch 1, wobei jeder Schritt des abgeleiteten neuronalen Netzwerks zur Operation an einer anderen Eingabe der Sequenz vorgesehen ist, und wobei die Sequenz von Eingaben eine vordefinierte Vielzahl von Eingaben umfasst.

3. Verfahren nach Anspruch 2, wobei das Transformieren entweder Folgendes umfasst:

Ausrollen der vorwärts- und rückwärtsgerichteten RNNs über die vordefinierte Vielzahl von Eingaben vor dem Bilden des abgeleiteten neuronalen Netzwerks in Hardware; oder
Ausrollen des BRNN über die vordefinierte Vielzahl von Eingaben vor dem Bilden des vorwärts- und des rückwärtsgerichteten RNN.

4. Verfahren nach einem der vorhergehenden Ansprüche, wobei die Vorwärts- und Rückwärtsoperationen bei jedem Schritt des BRNN unabhängig sind, wobei jeder Schritt des vorwärtsgerichteten RNN zur Operation an einer Eingabe der Sequenz und ihrem entsprechenden Vorwärtszustand vorgesehen ist und jeder Schritt des rückwärtsgerichteten RNN zur Operation an einer Eingabe der Sequenz und ihrem entsprechenden Rückwärtszustand vorgesehen ist.

5. Verfahren nach Anspruch 4, wobei das Implementieren des abgeleiteten neuronalen Netzwerks ein Implementieren des vorwärtsgerichteten und des rückwärtsgerichteten RNN zur gleichzeitigen Operation auf der Hardware umfasst, um das vorwärtsgerichtete und das rückwärtsgerichtete RNN parallel auszuführen.

6. Verfahren nach einem der Ansprüche 1 bis 3, wobei das BRNN ein sequenzielles BRNN ist und entweder:

jeder Schritt des vorwärtsgerichteten RNN zur Operation an einer Eingabe der Sequenz und ihrem entsprechenden Vorwärtszustand vorgesehen ist, und jeder Schritt des rückwärtsgerichteten RNN zur Operation an dem entsprechenden Rückwärtszustand und einer Ausgabe des entsprechenden Schritts des vorwärtsgerichteten RNN, das an der Eingabe der Sequenz operiert, vorgesehen ist; oder
jeder Schritt des rückwärtsgerichteten RNN zur Operation an einer Eingabe der Sequenz und ihrem entsprechenden Rückwärtszustand vorgesehen ist, und jeder Schritt des vorwärtsgerichteten RNN zur Operation an dem entsprechenden Vorwärtszustand und einer Ausgabe des entsprechenden Schritts des rückwärtsgerichteten RNN, das an der Eingabe der Sequenz operiert, vorgesehen ist.

7. Verfahren nach einem der vorhergehenden Ansprüche, wobei die Repräsentation des BRNN eine BRNN-Zelle umfasst, die Vorwärtsoperationen und Rückwärtsoperationen umfasst, und die nicht kausalen Operationen zu den Vorwärts- und/oder Rückwärtsoperationen gehören.

8. Verfahren nach Anspruch 4 oder 5, wobei die identifizierten nicht kausalen Operationen zu dem vorwärtsgerichteten und dem rückwärtsgerichteten RNN gehören.

9. Verfahren nach einem der vorhergehenden Ansprüche, wobei das Gruppieren ein Kombinieren der zumindest einigen nicht kausalen Operationen zur Durchführung als eine einzelne Faltungsoperation über die Vielzahl von Eingaben der Sequenz von Eingaben hinweg umfasst.

10. Verfahren nach einem der vorhergehenden Ansprüche, wobei das Transformieren des BRNN ferner ein Konfigurieren des abgeleiteten neuronalen Netzwerks derart umfasst, dass das Ergebnis von nicht kausalen Operationen, die in Bezug auf eine Eingabe der Sequenz von Eingaben durchgeführt werden, mit der Ausgabe des vorwärtsgerichteten und des rückwärtsgerichteten RNN in Bezug auf diese gleiche Eingabe kombiniert wird, wobei die Kombination der Ausgabe des BRNN in Bezug auf diese Eingabe entspricht.

11. Verfahren nach Anspruch 4 oder 5, wobei das Implementieren des abgeleiteten neuronalen Netzwerks in Hardware ein Zuweisen von Vorwärts- und Rückwärtsindizes zu jeder Eingabe der Sequenz umfasst, sodass das vorwärtsgerichtete RNN seine Eingaben unter Verwendung des Vorwärtsindex referenziert und das rückwärtsgerichtete RNN seine Eingänge unter Verwendung des Rückwärtsindex referenziert, wobei der Vorwärts- und der Rückwärtsindex so angeordnet sind, dass eine erste Eingabe der Sequenz gemäß dem Vorwärtsindex die letzte Eingabe der Sequenz gemäß dem Rückwärtsindex ist, und eine erste Eingabe der Sequenz gemäß dem Rückwärtsindex die letzte Eingabe der Sequenz gemäß dem Vorwärtsindex ist.

12. Verfahren nach einem der vorhergehenden Ansprüche, wobei das BRNN eine Vielzahl von gestapelten Schichten umfasst, die jeweils ein bidirektionales rekurrentes neuronales Netzwerk repräsentieren, und das Transformieren der Repräsentation des BRNN in Bezug auf jede der Schichten des BRNN durchgeführt wird, um ein Paar aus vorwärtsgerichtetem und rückwärtsgerichtetem RNN für jede Schicht des BRNN zu erzeugen, wobei jedes Paar aus vorwärtsgerichtetem und rückwärtsgerichtetem RNN in Abhängigkeit von einem entsprechenden Vorwärts- und Rückwärtszustand dieses Paars operiert.

**13.** Verfahren nach Anspruch 12, wobei das Transformieren des BRNN ferner ein Konfigurieren des abgeleiteten neuronalen Netzwerks derart umfasst, dass, für jede der Sequenz von Eingaben, die Ausgaben des obersten Paars aus vorwärtsgerichtetem und rückwärtsgerichtetem RNN in Bezug auf diese Eingabe kombiniert werden, um eine kombinierte Ausgabe zu erzeugen, die der Ausgabe des BRNN in Bezug auf diese Eingabe entspricht.

**14.** Datenverarbeitungssystem zur Implementierung eines bidirektionalen rekurrenten neuronalen Netzwerks (BRNN) zur Operation an einer Sequenz von Eingaben, wobei jeder Schritt des BRNN zur Operation an (a) einer Eingabe der Sequenz, (b) einem entsprechenden Rückwärtszustand, der in Bezug auf eine nachfolgende Eingabe der Sequenz erzeugt wird, und (c) einem entsprechenden Vorwärtszustand, der in Bezug auf eine vorhergehende Eingabe der Sequenz erzeugt wird, vorgesehen ist, wobei das System Folgendes umfasst:

eine Transformationseinheit (326), die so konfiguriert ist, dass sie eine Repräsentation des BRNN empfängt und die Repräsentation des BRNN in ein abgeleitetes neuronales Netzwerk transformiert, wobei das abgeleitete neuronale Netzwerk Folgendes umfasst:

ein vorwärtsgerichtetes rekurrentes neuronales Netzwerk (RNN) zur Operation an dem Vorwärtszustand über die Eingaben der Sequenz; und
ein rückwärtsgerichtetes rekurrentes neuronales Netzwerk (RNN) zur Operation an dem Rückwärtszustand über die Eingaben der Sequenz;
wobei das vorwärtsgerichtete und das rückwärtsgerichtete RNN über die Eingaben der Sequenz ausgerollt werden;
wobei das abgeleitete neuronale Netzwerk dem BRNN für jede Eingabe der Sequenz von Eingaben entspricht;
wobei die Transformationseinheit konfiguriert ist, die Repräsentation des BRNN in das abgeleitete neuronale Netzwerk zu transformieren, durch:

Identifizieren (808, 809) nicht kausaler Operationen, die zur Durchführung ohne Abhängigkeit von dem Vorwärts- oder dem Rückwärtszustand vorgesehen sind; und
Bilden einer nicht kausalen Schicht des abgeleiteten neuronalen Netzwerks durch Gruppieren (810) mindestens einiger der nicht kausalen Operationen;
einen Hardwarebeschleuniger (302) zum Verarbeiten neuronaler Netzwerke; und

Steuerlogik (324), die konfiguriert ist, das abgeleitete neuronale Netzwerk auf dem Hardwarebeschleuniger zu implementieren, um das BRNN an der Sequenz von Eingaben durchzuführen, wobei das Implementieren des abgeleiteten neuronalen Netzwerks ein Veranlassen der nicht kausalen Schicht zur parallelen Verarbeitung einer Vielzahl von Eingaben der Sequenz von Eingaben auf dem Hardwarebeschleuniger umfasst.

**15.** Verfahren nach einem der Ansprüche 1 bis 13, wobei das BRNN zur Operation an einem Eingangsstrom vorgesehen ist, der in überlappende oder nicht überlappende Eingangssequenzen einer vordefinierten Länge unterteilt ist, und die vordefinierte Länge jeder Eingangssequenz in Abhängigkeit von Eigenschaften eines Beschleunigers ausgewählt wird, auf dem das abgeleitete Netzwerk in Hardware implementiert ist.

**Revendications**

**1.** Procédé mis en œuvre par ordinateur pour implémenter en matériel un réseau neuronal récurrent bidirectionnel (BRNN) pour fonctionner sur une séquence d'entrées, chaque étape du BRNN étant destinée à fonctionner sur (a) une entrée de la séquence, (b) un état arrière correspondant généré par rapport à une entrée ultérieure de la séquence, et (c) un état avant correspondant généré par rapport à une entrée précédente de la séquence, le procédé comprenant :

la réception (801) d'une représentation du BRNN ;
la transformation (802 à 811) de la représentation du BRNN en un réseau neuronal dérivé équivalent au BRNN sur la séquence d'entrées, le réseau neuronal dérivé comprenant :

un réseau neuronal récurrent vers l'avant (RNN) destiné à fonctionner sur l'état vers l'avant sur les entrées de la séquence ; et
un réseau neuronal récurrent vers l'arrière (RNN) destiné à fonctionner sur l'état vers l'arrière sur les entrées de la séquence ;
les RNN vers l'avant et vers l'arrière étant déroulés sur les entrées de la séquence, dans laquelle la transformation de la représentation du BRNN en réseau neuronal dérivé comprend :

l'identification (808, 809) d'opérations non causales qui sont à exécuter sans dépendre de l'état vers l'avant ou vers l'arrière ; et
la formation d'une couche non causale du réseau neuronal dérivé en regroupant (810) les au moins certaines des opérations non causales ; et

la mise en œuvre (807) du réseau neuronal dérivé en matériel de manière à exécuter le BRNN sur la séquence d'entrées, la mise en œuvre du réseau neuronal dérivé comprenant le fait de faire en sorte que la couche non causale traite une pluralité d'entrées de la séquence d'entrées en parallèle au niveau du matériel.

2. Procédé selon la revendication 1, dans lequel chaque étape du réseau de neurones dérivé est destinée à fonctionner sur une entrée différente de la séquence d'entrées et dans lequel la séquence d'entrées comprend une pluralité prédéfinie d'entrées.

3. Procédé selon la revendication 2, dans lequel la transformation comprend soit :

le déroulement des RNN vers l'avant et vers l'arrière sur la pluralité prédéfinie d'entrées avant la formation du réseau neuronal dérivé en matériel ; ou
le déroulement du BRNN sur la pluralité prédéfinie d'entrées avant de former le réseau vers l'avant

4. Procédé selon l'une quelconque des revendications précédentes, dans lequel les opérations vers l'avant et vers l'arrière à chaque étape du BRNN sont indépendantes, chaque étape du RNN vers l'avant est destinée à fonctionner sur une entrée de la séquence et son état vers l'avant correspondant, et chaque étape du RNN vers l'arrière est destinée à fonctionner sur une entrée de la séquence et son état vers l'arrière correspondant.

5. Procédé selon la revendication 4, dans lequel la mise en œuvre du réseau neuronal dérivé comprend la mise en œuvre des RNN vers l'avant et vers l'arrière pour un fonctionnement simultané au niveau du matériel de manière à exécuter les RNN vers l'avant et vers l'arrière en parallèle.

6. Procédé selon l'une quelconque des revendications 1 à 3, dans lequel le BRNN est un BRNN séquentiel et soit :

chaque étape du RNN vers l'avant est destinée à fonctionner sur une entrée de la séquence et son état vers l'avant correspondant, et chaque étape du RNN vers l'arrière est destinée à fonctionner sur l'état vers l'arrière correspondant et une sortie de l'étape correspondante du RNN vers l'avant fonctionnant sur l'entrée de la séquence ; ou
chaque étape du RNN vers l'arrière est destinée à fonctionner sur une entrée de la séquence et son état vers l'arrière correspondant, et chaque étape du RNN vers l'avant est destinée à fonctionner sur l'état vers l'avant correspondant et une sortie de l'étape correspondante du RNN vers l'arrière fonctionnant sur l'entrée de la séquence.

7. Procédé selon l'une quelconque des revendications précédentes, dans lequel la représentation du BRNN comprend une cellule BRNN comprenant des opérations vers l'avant et des opérations vers l'arrière, et les opérations non causales font partie des opérations vers l'avant et/ou vers l'arrière.

8. Procédé selon la revendication 4 ou 5, dans lequel les opérations non causales identifiées font partie des RNN vers l'avant et vers l'arrière.

9. Procédé selon l'une quelconque des revendications précédentes, dans lequel le regroupement comprend la combinaison des au moins certaines opérations non causales pour une exécution en tant qu'opération de convolution unique sur la pluralité d'entrées de la séquence d'entrées.

10. Procédé selon l'une quelconque des revendications précédentes, dans lequel la transformation du BRNN comprend en outre la configuration du réseau neuronal dérivé de telle sorte que le résultat d'opérations non causales effectuées par rapport à une entrée de la séquence d'entrées soit combiné avec la sortie des RNN vers l'avant et vers l'arrière par rapport à cette même entrée, ladite combinaison étant équivalente à la sortie du BRNN par rapport à cette entrée.

11. Procédé selon la revendication 4 ou 5, dans lequel la mise en œuvre du réseau neuronal dérivé dans le matériel comprend l'attribution d'indices avant et arrière à chaque entrée de la séquence de sorte que le RNN avant se réfère à ses entrées en utilisant l'indice avant et le RNN arrière se réfère à ses entrées en utilisant l'indice arrière, les indices avant et arrière étant agencés de telle sorte qu'une première entrée de la séquence selon l'indice avant est la dernière entrée de la séquence selon l'indice arrière, et une première entrée de la séquence selon l'indice arrière est la dernière entrée de la séquence selon l'indice avant.

12. Procédé selon l'une quelconque des revendications précédentes, dans lequel le BRNN comprend une pluralité de couches empilées représentant chacune un réseau neuronal récurrent bidirectionnel, et la transformation de la représentation du BRNN est effectuée par rapport à chacune des couches du BRNN de manière à générer une paire de RNN avant et arrière pour chaque couche du BRNN, chaque paire de RNN avant et arrière fonctionnant en fonction de l'état avant et arrière correspondant de cette paire.

13. Procédé selon la revendication 12, dans lequel la transformation du BRNN comprend en outre la configuration du réseau neuronal dérivé de telle sorte que, pour chacune de la séquence d'entrées, les sorties de la paire la plus élevée de RNN avant et arrière par rapport à cette entrée soient combinées de manière à générer une sortie combinée qui est équivalente à la sortie du BRNN par rapport à cette entrée.

14. Système de traitement de données pour mettre en œuvre un réseau neuronal récurrent bidirectionnel (BRNN) pour une opération sur une séquence d'entrées, chaque étape du BRNN étant destinée à fonctionner sur (a) une entrée de la séquence, (b) un état arrière correspondant généré par rapport à une entrée suivante de la séquence, et (c) un état avant correspondant généré par rapport à une entrée précédente de la séquence, le système comprenant :

   une unité de transformation (326) configurée pour recevoir une représentation du BRNN et transformer la représentation du BRNN en un réseau neuronal dérivé, le réseau neuronal dérivé comprenant :

      un réseau neuronal récurrent vers l'avant (RNN) destiné à fonctionner sur l'état vers l'avant sur les entrées de la séquence ; et
      un réseau neuronal récurrent vers l'arrière (RNN) destiné à fonctionner sur l'état vers l'arrière sur les entrées de la séquence ;
      les RNN avant et arrière étant déroulés sur les entrées de la séquence ;
      le réseau neuronal dérivé étant équivalent au BRNN pour chacune de la séquence d'entrées ;
      dans lequel l'unité de transformation est configurée pour transformer la représentation du BRNN en un réseau neuronal dérivé par :

         l'identification (808, 809) d'opérations non causales qui sont à exécuter sans dépendre de l'état vers l'avant ou vers l'arrière ; et
         la formation d'une couche non causale du réseau neuronal dérivé en regroupant (810) les au moins certaines des opérations non causales ;
         un accélérateur matériel (302) pour le traitement de réseaux neuronaux ; et

   une logique de commande (324) configurée pour mettre en œuvre le réseau neuronal dérivé au niveau de l'accélérateur matériel de manière à réaliser le BRNN sur la séquence d'entrées, la mise en œuvre du réseau neuronal dérivé comprenant le fait de faire en sorte que la couche non causale traite une pluralité d'entrées de la séquence d'entrées en parallèle au niveau de l'accélérateur matériel.

15. Procédé selon l'une quelconque des revendications 1 à 13, dans lequel le BRNN est destiné à fonctionner sur un flux d'entrée divisé en séquences d'entrée se chevauchant ou ne se chevauchant pas d'une longueur prédéfinie et la longueur prédéfinie de chaque séquence d'entrée est sélectionnée en fonction des caractéristiques d'un accélérateur auquel le réseau dérivé est mis en œuvre dans le matériel.

100

o(t) ~ 104

109 ~ $h_{2F}(t)$

110

BRNN2
103

$h_{2B}(t)$ ~ 111

112

105 ~ $h_{1F}(t)$

106

BRNN1
102

$h_{1B}(t)$ ~ 107

108

x(t) ~ 101

**FIGURE 1**

$W_F$ ~ 216

212

$h_F(t-1)$

x(t)  210

$h_B(t+1)$

214

Concat
202

Concat
222

Matrix
Multiply
204

Matrix
Multiply 224

Activation
206

Activation
226

Concat
220

228

200

230

$h_F(t)$

y(t)

$h_B(t)$

232

$W_B$ ~ 218

**FIGURE 2**

FIGURE 3

o(t)  o(t+1)  o(t+2)

$h_{2B}(t)$ ◄······· $h_{2F}(t)$  $h_{2F}(t+1)$  ┄► $h_{2F}(t+2)$

Layer 2 | BRNN2 103 | BRNN2 103 | BRNN2 103 | Layer 2

$h_{2F}(t-1)$ ┄ ► $h_{2B}(t+1)$  $h_{2B}(t+2)$  ·······► $h_{2B}(t+3)$

$h_{1B}(t)$ ◄······· $h_{1F}(t)$  $h_{1F}(t+1)$  ┄► $h_{1F}(t+2)$

Layer 1 | BRNN1 102 | BRNN1 102 | BRNN1 102 | Layer 1

$h_{1F}(t-1)$ ┄ ► $h_{1B}(t+1)$  $h_{1B}(t+2)$  ·······► $h_{1B}(t+3)$

x(t)  x(t+1)  x(t+2)

400

**FIGURE 4**

608 ⌇ $W_{Fh}$  626

622  |$y_F(t)$  624

Causal Cell  604

$h_F(t-1)$ → | Matrix Multiply 614 | + 606 → | Activation 616 | → $h_F(t)$

Non-causal calculation

x(t) → | Matrix Multiply 612 | 602

620

600

$W_{Fx}$ ⌇ 610

**FIGURE 6**

**FIGURE 5**

FIGURE 7

801 | Receive a BRNN for operation over a predefined number of steps

802 | Identify forward and backward operations in each BRNN cell

803 | For each BRNN cell, generate a forward RNN cell comprising the forward operations

805 | For each BRNN cell, generate a backward RNN cell comprising the backward operations

Transformation

808 | Split causal and non-causal operations of forward RNN cells

809 | Split causal and non-causal operations of backward RNN cells

Causal/ Non-Causal Split 811

Group non-causal operations into non-causal cell(s) 810

Group non-causal operations into non-causal cell(s) 810

804 | Unroll forward RNN cells over the predefined number of steps to generate static forward network

806 | Unroll backward RNN cells over the predefined number of steps to generate static backward network

807 | Implement static forward and backward neural networks in hardware, optionally performing non-causal operations in parallel

800

FIGURE 8

902

302

CPU

NNA

914

Display — 916

Speakers — 918

Camera — 917

920

304 — Memory

**FIGURE 9**

1002

1004

1006

IC definition
dataset

Layout
processing

Circuit layout
definition

Integrated
circuit
generation

Integrated
circuit

**FIGURE 10**

1101 — Receive a BRNN

1102 — Transform BRNN into a test neural network comprising forward and backward RNNs

1109 —

Design Phase

1103 — Implement test neural network in hardware or software as a test neural network

1104 — Initialise input state values of forward and backward RNNs

1105 — Run derivative neural network on sample input data and collect statistics

1106 — Apply number format selection algorithm to the statistics

1107 — Identify common number format for each network value

1100

1108 — Use common number formats in derivative neural network

FIGURE 11

FIGURE 12

FIGURE 13

**REFERENCES CITED IN THE DESCRIPTION**

**Patent documents cited in the description**

- GB 2568083 A
- GB 2568084 A
- GB 2568081 A
- GB 2009432 A
- GB 1821150 A